# EUROPÄISCHE PATENTSCHRIFT

(11) **EP 3 465 797 B1**
(45) Veröffentlichungstag und Bekanntmachung des Hinweises auf die Patenterteilung: **01.01.2020**
(21) Anmeldenummer: 17732765.7
(22) Anmeldetag: 01.06.2017
(51) Int. Cl.: H01M 2/10, H01M 2/20, H01M 10/04, H01M 10/6555, H01M 10/613

(54) **BATTERIE MIT BATTERIEABSCHNITTEN UND KONTAKTIERUNGSABSCHNITTSELEMENT**
BATTERY WITH BATTERY SECTIONS AND SECTION CONTACT ELEMENT
BATTERIE AVEC DES SECTIONS DE BATTERIE ET DES ÉLÉMENTS DE CONTACT À CES SECTIONS

(30) Priorität: 03.06.2016 DE 102016110348; 06.07.2016 DE 102016112430; 06.07.2016 DE 102016112431; 30.08.2016 DE 202016104759 U; 05.09.2016 DE 202016107025 U; 02.11.2016 DE 102016120834; 02.11.2016 DE 102016120835; 02.11.2016 DE 102016120838; 02.11.2016 DE 102016120839; 02.11.2016 DE 102016120841
(43) Veröffentlichungstag der Anmeldung: 10.04.2019
(73) Patentinhaber: E-Seven Systems Technology Management Ltd, Valletta, VLT 1455 (MT)
(72) Erfinder: KRÄMER, Thomas, St. Julian`s STJ 3140 (MT)
(74) Vertreter: Cohausz & Florack
(86) Internationale Anmeldenummer: PCT/EP2017/063330
(87) Internationale Veröffentlichungsnummer: WO 2017/207703

(56) Entgegenhaltungen:
- WO-A1-2014/111233
- WO-A1-2015/036322
- DE-A1-102007 063 195
- DE-A1-102008 034 699
- US-A1- 2013 122 341

## Beschreibung

Die vorliegende Erfindung betrifft eine Batterie mit einer Zellanordnung, wobei die Zellanordnung mehrere Batteriezellen aufweist, wobei die Zellanordnung mindestens zwei Batterieabschnitte aufweist und jeder Batterieabschnitt aus mehreren Batteriezellen besteht, wobei jede Batteriezelle einen ersten und einen zweiten Endanschluss aufweist und wobei zwischen dem ersten und dem zweiten Endanschluss jeder Batteriezelle eine Batteriezellenlängsachse verläuft, wobei die Batteriezellenlängsachsen jedes Batterieabschnitts jeweils parallel zueinander ausgerichtet sind, und wobei die Batterieabschnitte benachbart zueinander angeordnet sind, wobei zwischen mindestens zwei benachbarten Batterieabschnitten ein zumindest teilweise elektrisch und thermisch leitfähiges Kontaktierungsabschnittselement mit einer ersten Seite und einer zweiten Seite angeordnet ist, das auf der ersten Seite und auf der zweiten Seite jeweils mindestens einen elektrisch und thermisch leitfähigen Kontaktierungsabschnitt aufweist, wobei die Batterieabschnitte so zueinander angeordnet sind, dass jedem Batterieabschnitt eine Ebene zugeordnet werden kann, die senkrecht zu den Batteriezellenlängsachsen der Batteriezellen des Batterieabschnitts durch mindestens eine der Batteriezellen des Batterieabschnitts verläuft und wobei durch diese Ebene zu dem Batterieabschnitt benachbarte Batterieabschnitte nicht geschnitten werden, wobei die der ersten Seite dieses Kontaktierungsabschnittselements zugewandten Endanschlüsse elektrisch und thermisch leitfähig mit dem mindestens einen Kontaktierungsabschnitt dieser ersten Seite verbunden sind, wobei die der zweiten Seite dieses Kontaktierungsabschnittselements zugewandten Endanschlüsse elektrisch und thermisch leitfähig mit dem mindestens einen Kontaktierungsabschnitt dieser zweiten Seite verbunden sind und wobei Endanschlüsse der Batteriezellen über das Kontaktierungsabschnittselement elektrisch und thermisch leitfähig miteinander verbunden sind, sodass ein elektrischer Strom und ein Wärmestrom über die gesamte Zellanordnung verteilt werden, wobei das Kontaktierungsabschnittselement als ein Leitergebildeelement ausgebildet ist, das teilweise aus einem nicht elektrisch leitfähigen Material besteht, wobei das Leitergebildeelement auf einer ersten Seite und auf einer zweiten Seite jeweils mindestens einen elektrisch und thermisch leitfähigen Kontaktierungsabschnitt aufweist, und wobei jeder Kontaktierungsabschnitt mit jedem anderen Kontaktierungsabschnitt elektrisch und thermisch leitfähig verbunden ist.

Derartige Batterien sind aus dem Stand der Technik hinlänglich bekannt und kommen zu vielen Zwecken zum Einsatz. Aus dem Stand der Technik sind Batterien in unterschiedlichen Größen und mit einer unterschiedlichen Anzahl parallel und in Reihe geschalteter Batteriezellen bekannt, wodurch die von der Batterie bereitgestellte Kapazität und die durch die Batterie bereitgestellte Spannung an den jeweiligen Einsatzzweck angepasst werden kann. Ein insbesondere auch für die vorliegende Erfindung wichtiger Einsatzzweck ist die Verwendung von Batterien bei elektrisch betriebenen Kraftfahrzeugen. Derartige Batterien können aber auch auf vielen anderen Einsatzgebieten zur Verwendung kommen.

Bei den Batteriezellen kann es sich um Primär- oder Sekundärzellen handeln, wobei die Batterie bei Verwendung von Sekundärzellen häufig auch als Akku-Pack bezeichnet wird. Aus dem Stand der Technik sind unterschiedliche Batteriezellenarten bekannt, die sich vor allem durch die für die Batteriezellen verwendeten Elektrodenmaterialien und Elektrolyten unterscheiden. Derzeit kommen in vielen Anwendungen Akku-Packs mit Lithium-Ionen-Batteriezellen und Nickel-Metallhybrid-Batteriezellen zum Einsatz. Üblicherweise werden für eine Batterie Batteriezellen eines Batteriezellentyps verwendet. Es ist für einige Anwendungen aber auch möglich und zweckmäßig, Batteriezellen unterschiedlicher Batteriezellentypen einzusetzen.

Insbesondere bei großen Batterien, beispielsweise zum Betrieb elektrisch angetriebener Kraftfahrzeuge, bei denen eine Vielzahl von Batteriezellen eingesetzt wird, treten innerhalb der Batterie unter anderem beim Laden mit vergleichsweise hohen Stromstärken Bereiche mit hohen Temperaturen auf, durch die der Ladebeziehungsweise Entladevorgang der in dem Bereich hoher Temperatur angeordneten Batteriezellen sowie deren Lebensdauer beeinflusst wird. Die Bereiche erhöhter beziehungsweise hoher Temperaturen werden auch als Temperaturhotspots bezeichnet. Die Temperaturverteilung innerhalb der Zellanordnung wird durch eine Vielzahl von Faktoren wie beispielsweise die Art der verwendeten Batteriezellen, die relative Anordnung der Batteriezellen zueinander, dem durch die Batteriezellen fließende Lade- beziehungsweise Entladestrom und den Alterungszustand der jeweiligen Batteriezelle beeinflusst.

Die WO 2014/111233 A1 betrifft eine Batterieeinheit, insbesondere für ein Wasserfahrzeug, mit mehreren Batterieelementen, die über eine Halteanordnung zu einer Batteriezelle miteinander verbunden sind.

Die US 2013/122341 A1 betrifft eine Batterie umfassend elektrochemische Akkumulatoren, welche in erste und zweite parallel geschaltete Gruppen aufgeteilt sind. Jeder Akkumulator der ersten Gruppe ist durch einen separaten elektrischen Verbinder durch eine Durchgangsbohrung seriell mit einem Akkumulator der zweiten Gruppe verbunden.

Als Aufgabe der Erfindung wird es angesehen, eine Batterie bereitzustellen, bei der das Auftreten von Temperaturhotspots innerhalb der Batterie vermieden wird. Die Aufgabe wird erfindungsgemäß dadurch gelöst, dass in dem nicht elektrisch leitfähigen Material des Leitergebildeelements ein Kern aus einem elektrisch und thermisch leitfähigen Material angeordnet ist, wobei auf dem Kern abgewandten Seiten des nicht elektrisch leitfähigen Materials jeweils der mindestens eine Kontaktierungsabschnitt angeordnet ist, und wobei mindestens ein elektrisch und thermisch leitfähiges Durchführungselement sich durch den Kern und durch das auf dem Kern beidseitig angeordnete, nicht elektrisch leitfähige Material erstreckt, wobei das Durchführungselement gegenüber dem Kern elektrisch isoliert ist und elektrisch leitfähig mit dem mindestens einen Kontaktierungsabschnitt auf der ersten Seite und mit dem mindestens einen Kontaktierungsabschnitt auf der zweiten Seite verbunden ist, sodass eine elektrisch und thermisch leitfähige Verbindung der Kontaktierungsabschnitte auf der ersten Seite mit den Kontaktierungsabschnitten auf der zweiten Seite durch das Durchführungselement hergestellt wird und ein Wärmestrom durch den Kern aufgenommen und aus dem Leitergebildeelement abgeführt werden kann.

Die Batteriezellen unterschiedlicher Batterieabschnitte sind so angeordnet, dass sie niemals vollständig nebeneinander angeordnet sind. Einzelne Batteriezellen unterschiedlicher Batterieabschnitte können teilweise seitlich versetzt von Batteriezellen benachbarter Batterieabschnitte angeordnet sein. Die Batteriezellen benachbarter Batterieabschnitte können jedoch nicht vollständig nebeneinander angeordnet werden, da andernfalls keine Ebene vorliegt, die senkrecht zu den Batteriezellenlängsachsen eines Batterieabschnitts durch mindestens eine der Batteriezellen des Batterieabschnitts verläuft und dabei keine Batteriezellen benachbarter Batterieabschnitte schneidet.

Ein großer Teil der in den Batteriezellen hervorgerufenen thermischen Energie wird bei dem erfindungsgemäßen Aufbau über die Endanschlüsse der Batteriezellen durch die gesamte Zellenanordnung geleitet. Dabei erfolgt eine Verteilung der elektrischen und thermischen Energie zwischen den Batteriezellen über die Kontaktierungsabschnittselemente. Die Endanschlüsse der Batteriezellen eignen sich zur Übertragung der thermischen Energie in besonderer Weise, da sie thermisch leitend mit einem Inneren der Batteriezellen verbunden sind und selbst aus einem elektrisch und thermisch gut leitenden Material bestehen. Dahingegen ist eine Kühlung und Wärmeabfuhr über einen Zellmantel einer Batteriezelle häufig weniger effizient, da der Zellmantel üblicherweise aus einem thermisch und elektrisch schlecht leitfähigen Material besteht.

Falls die Batteriezellen hinsichtlich ihrer elektrischen und thermischen Leitfähigkeit gleichmäßig dimensioniert sind, ergibt sich eine gleichmäßige Verteilung des elektrischen Stroms und des Wärmestroms innerhalb der Batteriezellen. Ist die Wärmeleitfähigkeit und/oder der Widerstand einer oder mehrerer Batteriezellen vermindert, so wird durch den Aufbau erreicht, dass zumindest durch die verbleibenden Batteriezellen ein elektrischer Strom und ein Wärmestrom innerhalb der Batterie gleichmäßig verteilt wird. Eine gleichmäßige Verteilung des elektrischen Stroms und des Wärmestroms trägt dazu bei, Hotspots innerhalb der Batterie zu vermeiden.

Erfindungsgemäß wird es ermöglicht, thermische Energie aus den Batteriezellen über die einzelnen Batterieabschnitte hinweg zwischen den Batterieabschnitten und den einzelnen Batteriezellen zu verteilen. Ferner wird es durch die erfindungsgemäße Zellanordnung ermöglicht, einen elektrischen Strom gleichmäßig auf die Batteriezellen zu verteilen. Eine gleichmäßige Verteilung des Stroms trägt zu einer gleichmäßigen Wärmeverteilung innerhalb der Batterie bei, da eine Batteriezelle durch einen höheren Strom stärker erwärmt wird. Ändert sich die Temperatur einer Batteriezelle, so ändert sich auch ihr elektrischer Widerstand. Somit beeinflussen sich der elektrische Widerstand und die Temperatur der Batteriezellen innerhalb einer Batterie gegenseitig. Daraus folgt, dass es besonders wichtig ist, sowohl den elektrischen Strom als auch die thermische Energie innerhalb einer Batterie gleichmäßig auf deren Batteriezellen zu verteilen.

Erfindungsgemäß ist zwischen zwei Batterieabschnitten jeweils ein Kontaktierungsabschnittselement angeordnet. Hierbei handelt es sich um einen elektrisch und thermisch zumindest teilweise leitfähigen Körper. Dieser weist zumindest abschnittsweise Bereiche auf, die als Kontaktierungsabschnitte geeignet sind. Batteriezellen der Batterie sind mit den Kontaktierungsabschnitten elektrisch und thermisch leitfähig verbunden. Dabei kann das Kontaktierungsabschnittselement unterschiedliche geometrische Ausgestaltungen aufweisen. Durch das Kontaktierungsabschnittselement wird eine Kontaktierung de: Batteriezellen sowie eine Verteilung eines elektrischen Stroms und eines Wärmestroms zwischen den mit dem Kontaktierungsabschnittselement elektrisch und thermisch leitfähig verbundenen Batteriezellen durch das Kontaktierungsabschnittselement ermöglicht werden. Das Kontaktierungsabschnittselement ist vorzugsweise starr ausgebildet.

Die Batteriezellen innerhalb jedes Batterieabschnitts können im Hinblick auf ihre Batteriepolung übereinstimmend ausgerichtet sein. So können sämtliche Batteriezellen innerhalb eines Batterieabschnitts so ausgerichtet sein, dass sie jeweils mit einem ersten Endanschluss, der einen positiven Batteriepol bildet, ein erstes Kontaktierungsabschnittselement kontaktieren und mit einem zweiten Endanschluss, der einen negativen Batteriepol bildet, ein zweites Kontaktierungsabschnittselement kontaktieren. Die Batteriezellen müssen im Hinblick auf ihre Batteriepolung jedoch nicht notwendigerweise übereinstimmend ausgerichtet sein. So ist es auch möglich, dass an einem Kontaktierungsabschnittselement an einer Seite sowohl Batteriepluspole als auch Batterieminuspole anliegen.

Es ist bevorzugt, wenn die mit dem mindestens einen Kontaktierungsabschnitt der ersten Seite verbundenen Endanschlüsse untereinander über das Kontaktierungsabschnittselement elektrisch und thermisch leitfähig miteinander verbunden sind, wobei die mit dem mindestens einen Kontaktierungsabschnitt der zweiten Seite verbundenen Endanschlüsse untereinander über das Kontaktierungsabschnittselement elektrisch und thermisch leitfähig miteinander verbunden sind, und wobei die mit dem mindestens einen Kontaktierungsabschnitt der ersten Seite verbundenen Endanschlüsse elektrisch und thermisch leitfähig mit den mit dem mindestens einen Kontaktierungsabschnitt der zweiten Seite verbundenen Endanschlüssen über das Kontaktierungsabschnittselement verbunden sind, sodass die Batteriezellen in einer elektrischen Reihen- und Parallelschaltung elektrisch leitfähig miteinander verbunden sind und außerdem thermisch leitfähig miteinander verbunden sind. Es hat sich herausgestellt, dass bei einer solchen Verschaltung eine besonders gleichmäßige Verteilung von Wärme und elektrischem Strom über alle Batteriezellen der Batterie hinweg eintritt.

Vorzugsweise sind benachbarte Batterieabschnitte voneinander in Richtung einer Batteriezellenlängsachse eines der benachbarten Batterieabschnitte beabstandet zueinander angeordnet. Der Abstand zwischen den Batterieabschnitten kann durch das Kontaktierungsabschnittselement hergestellt werden. Gemäß dieser räumlichen Ausgestaltung können die Batteriezellen unterschiedlicher Batteriezellen nicht in einer Richtung senkrecht zu den Batteriezellenlängsachsen nebeneinander angeordnet sein, sondern sind stets zueinander versetzt in Richtung einer Batteriezellenlängsachse eines der benachbarten Batterieabschnitte voneinander beabstandet.

Erfindungsgemäß ist es ferner möglich, dass die Batteriezellen benachbarter Batterieabschnitte so angeordnet sind, dass mindestens eine durch eine Batteriezelle eines Batterieabschnitts verlaufende Achse, die parallel zu einer Batteriezellenlängsachse dieser Batteriezelle verläuft, eine Batteriezelle in einem benachbarten Batterieabschnitt schneidet. Somit sind die Batteriezellen benachbarter Batterieabschnitte so zueinander angeordnet, dass sich Querschnitte der Batteriezellen zumindest teilweise überlappen, wenn ein Querschnitt einer Batteriezelle in Richtung der Batteriezellenlängsachse dieser Batteriezelle verschoben wird.

Ferner kann es erfindungsgemäß vorgesehen sein, dass die Batteriezellen benachbarter Batterieabschnitte zueinander gegenüberliegend an einem Kontaktierungsabschnittselement anliegen. Dies setzt voraus, dass die Anordnung der Batteriezellen in benachbarten Batterieabschnitten übereinstimmt. Erfindungsgemäß ist es jedoch auch möglich, dass die Batteriezellen in benachbarten Batterieabschnitten zueinander unterschiedlich angeordnet sind. Demgemäß können auch einige oder alle Batteriezellen so an dem Kontaktierungsabschnittselement anliegen, dass jeweils an einer gegenüberliegenden Seite des Kontaktierungsabschnittselements keine Batteriezelle eines benachbarten Batterieabschnitts anliegt.

Es ist besonders bevorzugt, wenn die Batteriezellen aller Batterieabschnitte der Batterie zueinander parallel ausgerichtete Batteriezellenlängsachsen aufweisen. Somit weisen alle Batteriezellen in einer Batterie eine übereinstimmende Ausrichtung in Richtung einer Batterieachse auf. Eine solchermaßen aufgebaute Batterie kann aufgrund dieses Aufbaus Kräfte, die in Richtung der Batterieachse auf die Batterie ausgeübt werden, besonders gut aufnehmen. Ein solcher Aufbau ist besonders dann vorteilhaft, wenn die Batteriezellen benachbarter Batterieabschnitte sämtlich zueinander gegenüberliegend an dem Kontaktierungsabschnittselement angeordnet sind. Somit können Kräfte von einer Batteriezelle in Richtung der Batterieachse über das Kontaktierungsabschnittselement in vorteilhafter Weise an eine gegenüberliegende Batteriezelle in einem benachbarten Batterieabschnitt übertragen werden.

Wenn alle Batteriezellen der Batterie zueinander parallel ausgerichtete Batteriezellenlängsachsen aufweisen, so ist es vorteilhaft, wenn die Batterieabschnitte der Batterie hintereinander entlang einer Batterieachse angeordnet sind, die parallel zu den Batteriezellenlängsachsen verläuft. Die Batterieabschnitte sind somit nicht zueinander in einer Richtung senkrecht zu dieser Batterieachse angeordnet. Kräfte innerhalb der Batterie können besonders gut entlang der Batteriezellenlängsachsen der Batteriezellen durch die gesamte Zellanordnung übertragen werden.

Es ist ganz besonders vorteilhaft, wenn alle Batterieabschnitte der Batterie in einem Batterieraum liegen, wobei ein Batterieraumquerschnitt des Batterieraums senkrecht zur Batterieachse einem maximalen Batterieabschnittsquerschnitt einer Batterieabschnittsumhüllenden eines Batterieabschnitts senkrecht zur Batterieachse entspricht, wobei der maximale Batterieabschnittsquerschnitt der Batterieabschnittsquerschnitt eines Batterieabschnitts ist, der sämtliche Batterieabschnittsquerschnitte aller Batterieabschnitte entlang der Batterieachse einschließt. Die Batterieabschnittsumhüllenden werden durch Mantelflächen der jeweils außen liegenden Batteriezellen des jeweiligen Batterieabschnitts gebildet. Durch einen Batterieabschnitt wird somit ein Querschnitt eines Batterieabschnitts definiert, dessen Fläche entweder genau so groß oder größer ist als die Fläche der Querschnitte aller anderen Batterieabschnitte der Batterie.

Vorzugsweise bilden die ersten Endanschlüsse der Batteriezellen Batteriepluspole und die zweiten Endanschlüsse der Batteriezellen bilden Batterieminuspole, wobei die Batteriezellen eines Batterieabschnitts mit einem Kontaktierungsabschnittselement jeweils ausschließlich über Batteriepluspole oder ausschließlich über Batterieminuspole verbunden sind. Dabei wird ein Kontaktierungsabschnittselement bevorzugt auf einer ersten Seite ausschließlich über Batteriepluspole und auf einer zweiten Seite ausschließlich über Batterieminuspole kontaktiert. Dies ermöglicht eine elektrische und thermische Parallel- und Reihenschaltung innerhalb der Batterie über alle Batteriezellen und alle Kontaktierungsabschnittselemente innerhalb der Batterie hinweg. Nachfolgend sollen ersten Endanschlüsse der Batteriezellen, die Batteriepluspole bilden, als positive Endanschlüsse bezeichnet werden. Zweite Endanschlüsse der Batteriezellen, die Batterieminuspole bilden, sollen nachfolgend als negative Endanschlüsse bezeichnet werden.

Gemäß einer besonderen Ausführungsform der Erfindung ist das Kontaktierungsabschnittselement plattenförmig ausgebildet. Ein plattenförmiges Kontaktierungsabschnittselement zeichnet sich durch eine in einem Verhältnis zu seiner Höhe und Breite geringe Tiefe aus. Ein plattenförmiges Kontaktierungsabschnittselement lässt sich besonders einfach zwischen benachbarten Batterieabschnitten anordnen, um diese miteinander elektrisch und thermisch leitfähig zu verbinden. Alle Kontaktierungsabschnitte eines plattenförmigen Kontaktierungsabschnittselements auf einer Seite des Kontaktierungsabschnittselements verlaufen in einer Ebene. Alternativ kann das Kontaktierungsabschnittselement nicht plattenförmig ausgebildet sein, sondern lediglich flächige Abschnitte aufweisen, die stufenartig voneinander versetzt an dem Kontaktierungsabschnittselement angeordnet sind. Vorteilhaft ist dabei ein Kontaktierungsabschnittselement, das beidseitig Kontaktierungsabschnitte aufweist, die stufenartig voneinander versetzt angeordnet sind. Das Kontaktierungsabschnittselement kann so ausgebildet sein, dass darauf vorgesehene Kontaktierungsabschnitte auf einer Seite des Kontaktierungsabschnitts in zwei unterschiedlichen Ebenen oder in mehr als zwei unterschiedlichen Ebenen angeordnet sind.

Vorzugsweise ist an einem Batterieanfangsbereich und einem Batterieendbereich der Zellanordnung jeweils eine Druckplatte angeordnet, wobei die Druckplatten über Zugelemente miteinander verbunden sind und dadurch die an dem mindestens einen Kontaktierungsabschnittselement anliegenden Batteriezellen an das mindestens eine Kontaktierungsabschnittselement andrücken, und wobei der Batterieanfangsbereich und der Batterieendbereich durch Endanschlüsse an einem ersten Ende und an einem zweiten Ende der Zellanordnung definiert werden. Die Komponenten innerhalb der Zellanordnung werden hierdurch miteinander verpresst. Dabei üben die Druckplatten eine Anpresskraft auf die Batteriezellen aus. Die Druckplatte kann erfindungsgemäß die Anpresskraft an dem Batterieanfangsbereich beziehungsweise an dem Batterieendbereich unmittelbar auf die Batteriezellen ausüben. So kann die Druckplatte unmittelbar an Endanschlüssen der Batteriezellen anliegen. Die Druckplatte kann die Anpresskraft an dem Batterieanfangsbereich beziehungsweise an dem Batterieendbereich alternativ jedoch auch indirekt auf die Batteriezellen ausüben. So kann zwischen der Druckplatte und den Batteriezellen erfindungsgemäß eine zusätzliche Schicht vorgesehen sein. Diese zusätzliche Schicht kann elektrisch nichtleitend und/oder elastisch ausgeführt sein. Ferner kann es vorgesehen sein, dass zwischen einer Druckplatte und einem Batterieanfangsbereich beziehungsweise einem Batterieendbereich ein Kontaktierungsabschnittselement angeordnet ist.

Erfindungsgemäß können die Druckplatten flächig ausgebildet sein, es sind jedoch auch abweichende Bauformen der Druckplatten möglich. Die Zugelemente sind jeweils mit den Druckplatten verbunden. Dabei sind die Zugelemente solchermaßen zwischen den Druckplatten verspannt, dass sie eine Zugkraft auf die Druckplatten ausüben. Bedingt durch die Zugkraft können die Druckplatten wiederum die bereits beschriebene Anpresskraft auf die Zellanordnung ausüben. Die Anpresskraft wird über alle Batterieabschnitte der Zellanordnung hinweg innerhalb der Batterie übertragen. Dadurch werden die Batteriezellen besonders gut mit dem mindestens einen Kontaktierungsabschnittselement innerhalb der Zellanordnung kontaktiert, denn durch eine hohe Anpresskraft wird eine Kontaktierungsflache zwischen den Kontaktierungsabschnittselementen und Endanschlüssen der Batteriezellen vergrößert.

Die Zugelemente können als Stangen, als Rohre oder als sonstige längliche Elemente ausgebildet sein. Vorzugsweise sind die Stangen aus einem Metall, ganz besonders bevorzugt aus Stahl ausgeführt. Die Stangen können alternativ jedoch auch aus einem besonders stabilen Kunststoff oder aus einem Verbundmaterial ausgeführt sein.

Durch ein Verpressen können ein elektrischer Strom und ein Wärmestrom besonders gut innerhalb der Batterie verteilt werden. Ferner wird die Batterie dadurch in einem besonderen Maße stabilisiert, sodass sie auch starken mechanischen Belastungen widerstehen kann. Dies ist insbesondere dann von Vorteil, wenn eine Batterie solchen mechanischen Belastungen regelmäßig ausgesetzt ist.

Vorzugsweise sind die Batteriezellen in den Batterieabschnitten in ersten und zweiten Zellebenen angeordnet, wobei die ersten und die zweiten Zellebenen alternierend innerhalb eines Batterieabschnitts angeordnet sind, wobei entlang jeder Zellebene mindestens zwei Batteriezellen angeordnet sind, wobei zwischen benachbarten Batteriezellen in der ersten Zellebene und benachbarten Batteriezellen in der zweiten Zellebene ein gleicher Abstand vorgegeben ist, wobei die Batteriezellen in der ersten Zellebene versetzt zu den Batteriezellen in der zweiten Zellebene angeordnet sind, und wobei die Batteriezellen in allen Batterieabschnitten gleichartig angeordnet sind, sodass innerhalb der Mantelfläche mindestens ein äußerer Durchtrittsabschnitt gebildet wird, durch den eines der Zugelemente hindurchgeführt ist. Die Batteriezellen in einer ersten Zellebene beziehungsweise in einer zweiten Zellebene können dabei voneinander beliebig beabstandet sein. Sie können so weit voneinander beabstandet sein, dass innere Durchtrittsabschnitte in der Zellanordnung vorliegen, durch die Zugelemente hindurchgeführt werden können.

Gemäß einer weiteren Ausführungsform der Erfindung liegen die Batteriezellen in Eckbereichen der Batterieabschnitte an zwei anderen Batteriezellen und in Randbereichen der Batterieabschnitte an drei oder vier anderen Batteriezellen an, wobei alle Batteriezellen, die nicht in einem Eckbereich oder einem Randbereich angeordnet sind, an sechs anderen Batteriezellen anliegen und wobei jeder Kontaktierungsabschnitt eine übereinstimmende Zellanordnung aufweist, sodass innerhalb der Mantelfläche mindestens ein äußerer Durchtrittsabschnitt gebildet wird, durch den eines der Zugelemente hindurchgeführt ist. Gemäß dieser Anordnung liegen die Batteriezellen seitlich direkt aneinander an, wodurch sie besonders gut miteinander gepackt sind. Es lässt sich somit in jedem Batterieabschnitt eine besonders große Zahl von Batteriezellen anordnen. Dabei ergeben sich äußere Durchtrittsabschnitte zwischen den Batteriezellen und einer die Batteriezellen umhüllenden Mantelfläche. Es sind erfindungsgemäß jedoch auch abweichende Anordnungen der Batteriezellen innerhalb der Batterieabschnitte möglich.

Erfindungsgemäß kann innerhalb der Batterieabschnitte jeweils mindestens eine Batteriezelle entnommen sein, sodass innerhalb der Mantelfläche mindestens ein innerer Durchtrittsabschnitt gebildet wird, durch den eines der Zugelemente hindurchgeführt ist. Die Entnahme einer zusätzlichen Batteriezelle ist sowohl bei einer versetzten Anordnung der Batteriezellen als auch bei einer sonstigen Anordnung der Batteriezellen innerhalb der Batterie möglich. Hierdurch lässt sich zusätzlicher Raum innerhalb der Batterie gewinnen, der als Durchtrittsabschnitt dienen kann.

Es ist vorteilhaft, wenn die Druckplatten als Metallplatten ausgebildet sind. Metallplatten sind ausreichend stabil, sodass über sie eine Zugkraft von den Zugelementen auf die Zellanordnung übertragen werden kann. Die Metallplatten können dabei in Abhängigkeit von einer gewünschten Zugkraft unterschiedlich dick ausgeführt sein. Wird eine hohe Zugkraft gewünscht, so muss die Metallplatte besonders dick ausgeführt sein. Vorzugsweise ist die Metallplatte 3 bis 20 mm dick ausgeführt, ganz besonders bevorzugt ist sie 5 mm dick ausgeführt. Die Metallplatten können erfindungsgemäß aus Kupfer, aus Aluminium oder aus einem sonstigen sehr gut wärmeleitfähigen Material ausgebildet sein. Alternativ ist es möglich, die Druckplatten nicht aus Metall auszuführen. So können die Druckplatten erfindungsgemäß aus einem harten Kunststoff ausgeführt sein.

Bevorzugt sind die Zugelemente durch Ausnehmungen in den Druckplatten hindurchgeführt, wobei die Zugelemente in den Druckplatte verschraubt sind und/oder mit Hilfe von Muttern an den Druckplatten verschraubt sind. Eine Schraubverbindung erlaubt es, eine durch die Zugelemente auf die Druckplatten auszuübende Zugkraft genau einzustellen. Es sind erfindungsgemäß jedoch auch sonstige Festlegungsmittel verwendbar, um die Zugelemente an den Aussparungen so festzulegen, dass die Zugelemente eine Zugkraft auf die Druckplatten ausüben. Erfindungsgemäß ist es möglich, dass die Zugelemente aus einem elektrisch nicht leitfähigen Material gefertigt sind. Hierdurch kann es verhindert werden, dass ein elektrischer Strom über die Zugelemente geführt ist. Dies ist insbesondere bei Ausführungsvarianten der Erfindung von Bedeutung, bei denen die Druckplatten elektrischen Strom führen. Alternativ ist es möglich, dass die Zugelemente mit einem elektrisch nicht leitfähigen Material beschichtet sind, um die Zugelemente elektrisch zu isolieren.

Vorzugsweise sind die Zugelemente solchermaßen mit den Druckplatten verbunden, dass auf jede Druckplatte durch di mit ihr verbundenen Zugelemente eine Druckkraft von mindestens 50 N, bevorzugt mindestens 100 N und besonders bevorzugt mindestens 200 N in Richtung der Batterieabschnitte ausgeübt wird. Hierdurch werden die Batteriezellen und die Kontaktierungsabschnittselemente innerhalb der Batterie besonders gut strom- und wärmeleitend miteinander kontaktiert. Außerdem ist die Zellanordnung besonders stabil, wenn eine entsprechend hohe Zugkraft auf die Zellanordnung ausgeübt wird.

Bevorzugt weist mindestens eine Druckplatte Kühlrippen auf. Durch Kühlrippen wird eine Oberfläche der Druckplatten vergrößert, sodass die Druckplatten Wärme besser abführen können. Somit kann aus den Stirnseiten der Batterie Wärme aus der Zellanordnung über die Druckplatten in vorteilhafter Weise abgeführt werden. Kühlrippen eignen sich besonders dann, wenn die Druckplatten aus einem Metall wie Kupfer oder Aluminium ausgeführt ist.

Vorzugsweise liegen Endanschlüsse eines Batterieabschnitts unmittelbar an Endanschlüssen eines benachbarten Batterieabschnitts elektrisch und thermisch leitfähig an. Dabei liegen ganz besonders bevorzugt positive Endanschlüsse unmittelbar an negativen Endanschlüssen eines benachbarten Batterieabschnitts an. Demgemäß sind zwei oder mehr Batteriezellen in Reihe geschaltet, ohne dass dabei direkt benachbarte Batteriezellen durch ein Kontaktierungsabschnittselement voneinander separiert sind. Ein solcher Aufbau kann vorgesehen werden, wenn eine ausreichende Verteilung eines elektrischen Stroms und eines Wärmestroms innerhalb einer Batterie auch mit einer geringen Zahl von Kontaktierungsabschnittselementen innerhalb der Zellanordnung möglich ist. Ob dies der Fall ist, wird maßgeblich durch kapazitive und weitere Eigenschaften der Batteriezellen bestimmt.

Gemäß eine besonderen Ausführungsform der Erfindung sind die Batteriezellen als Rundzellen ausgebildet. Rundzellen weisen einen zylinderförmigen Grundkörper mit an auf den einander gegenüberliegenden Seitenflächen angeordneten Endanschlüssen auf. Rundzellen weisen innerhalb einer Batterieanordnung gegenüber einer herkömmlichen quaderförmigen Coffee-Bag-Zelle den Vorteil auf, dass innerhalb einer Zellanordnung zwischen den Rundzellen aufgrund deren Geometrie Hohlräume vorhanden sind. Diese Hohlräume sind besonders dann von Vorteil, wenn es innerhalb der Batterie zu einer Fehlfunktion kommt, bei der eine oder mehrere Batteriezellen aufplatzen oder sogar explodieren. Bei einer herkömmlichen Batterieanordnung mit einer oder mehreren Coffee-Bag-Zellen verbleibt innerhalb der Batterie kein Raum, in dem sich die aufplatzenden oder explodierenden Batteriezellen ausdehnen können.

Die überschüssige Energie kann nicht abgeführt werden, wodurch bei einer Batterieanordnung mit vielen Zellen im schlimmsten Fall eine Explosion der gesamten Batterie droht. Bei einer Zellanordnung auf der Grundlage von Rundzellen ist diese Gefahr deutlich vermindert.

Gemäß einer besonderen Ausführungsform der Erfindung ist in der Zellanordnung mindestens eine Positionierungsplatte angeordnet, durch die die Batteriezellen des Batterieabschnitts hindurchgeführt sind, wobei die Positionierungsplatte eine Aussparung aufweist, durch die die Batteriezellen hindurchgeführt sind, und wobei die Aussparung durch eine Hüllkurve um die Batteriezellen des Batterieabschnitts definiert wird, sodass die Aussparung die Batteriezellen formschlüssig umgreift, um die Batteriezellen innerhalb der Batterie zu positionieren und zu stabilisieren. Dabei berührt eine Randfläche der Aussparung nicht notwendigerweise alle Batteriezellen, die durch die Aussparung hindurchgeführt sind. Auch auf Batteriezellen, die nicht von einer Seitenfläche der Aussparung berührt werden, wird indirekt eine stabilisierende Wirkung durch benachbarte Batteriezellen ausgeübt, die unmittelbar an einer Seitenfläche der Aussparung anliegen. Die Positionierungsplatte kann aus Metall, Kunststoff, Holz oder einem sonstigen Material ausgeführt sein. Die Positionierungsplatte kann alternativ nicht bloß eine Aussparung, sondern eine zusammenhängende Fläche aufweisen, die mehrere Aussparungen aufweist, wobei durch jede Aussparung mindestens eine Batteriezelle hindurchgeführt ist, und wobei jede Aussparung durch eine Hüllkurve um die mindestens eine durch sie hindurchgeführte Batteriezelle definiert wird, sodass die Aussparung die mindestens eine Batteriezelle formschlüssig umgreift, um die mindestens eine Batteriezelle innerhalb der Batterie zu positionieren und zu stabilisieren.

Es ist vorteilhaft, wenn an jedem Kontaktierungsabschnittselement beidseitig jeweils eine Positionierungsplatte angeordnet ist. Hierdurch werden die Batteriezellen in den Bereichen der Batterie besonders gut stabilisiert, in denen sie die Kontaktierungsabschnittselemente kontaktieren. Insbesondere, wenn die Kontaktierungsabschnittselemente besonders gestaltete Kontaktierungsbereiche aufweist, an denen diese zu kontaktieren ist, ist eine solche Anordnung der Positionierungsplatten vorteilhaft. Die positiven Endanschlüsse und die negativen Endanschlüsse können dann im Bereich der Kontaktierungsabschnittselemente besonders genau positioniert werden.

Vorzugsweise ist mindestens ein Kontaktierungsabschnittselement thermisch leitfähig über ein Wärmeabfuhrelement mit einer Wärmesenke verbunden. Die Wärmesenke sollte sich dabei außerhalb der Batterie befinden, kann aber auch einen Teil der Batterie bilden. Durch ein entsprechend angeordnetes Wärmeabfuhrelement lässt sich ein Wärmestrom aus der Zellanordnung abführen.

Die Zellanordnung kann erfindungsgemäß von einem thermisch leitfähigen Gehäuse umschlossen sein. Da das Gehäuse thermisch leitfähig ist, eignet es sich dazu, als eine Wärmesenke Wärme aus der Zellanordnung aufzunehmen und optional an weitere Wärmesenken zu übertragen, mit denen e thermisch leitfähig verbunden ist. Das vorhergehend beschriebene Wärmeabfuhrelement kann mit dem Gehäuse thermisch leitfähig verbunden sein. Das Gehäuse ist vorzugsweise aus einem Metall gefertigt, besonders bevorzugt aus Eisen, Aluminium oder einer Metalllegierung. Ein solches Gehäuse ist dazu geeignet, die Zellanordnung vor äußeren Einwirkungen zu schützen. Das Gehäuse weist vorzugsweise zwei Öffnungen auf, auf welche die Druckplatten aufgesetzt werden. Das Gehäuse kann erfindungsgemäß längliche Aussparungen als Belüftungsschlitze aufweisen.

Erfindungsgemäß ist das Kontaktierungsabschnittselement als ein Leitergebildeelement ausgebildet, das teilweise aus einem nicht elektrisch leitfähigen Material besteht, wobei das Leitergebildeelement auf einer ersten Seite und auf einer zweiten Seite jeweils mindestens einen elektrisch und thermisch leitfähigen Kontaktierungsabschnitt aufweist, und wobei jeder Kontaktierungsabschnitt mit jedem anderen Kontaktierungsabschnitt elektrisch und thermisch leitfähig verbunden ist. Hierzu können erfindungsgemäß in das nicht elektrisch leitfähige Material des Kontaktierungsabschnittselements elektrisch und thermisch leitfähige Materialien eingebettet sein. Das Leitergebildeelement erlaubt es, eine elektrische und thermische Verbindung der Batteriezellen herzustellen. Bei einem als ein Leitergebildeelement ausgeführten Kontaktierungsabschnittselement ist es besonders vorteilhaft, wenn die Batteriezellen der Batterie mit einer vergleichsweise hohen Kraft an dieses angedrückt werden, sodass eine besonders gut elektrisch und thermisch leitfähige Verbindung zwischen den Batteriezellen und der dem Kontaktierungsabschnittselement entsteht. Bei dem Leitergebildeelement kann es sich um eine Platine handeln. Es kann sich dabei jedoch auch um ein räumlich abweichend ausgebildetes Element handeln. So kann das Leitergebildeelement erfindungsgemäß eine Quaderform oder eine sonstige Form aufweisen.

Erfindungsgemäß ist in dem nicht elektrisch leitfähigen Material des Leitergebildeelements ein Kern aus einem elektrisch und thermisch leitfähigen Material flächig angeordnet, wobei auf dem Kern abgewandten Seiten des nicht elektrisch leitfähigen Materials jeweils der mindestens eine Kontaktierungsabschnitt angeordnet ist, und wobei mindestens ein elektrisch und thermisch leitfähiges Durchführungselement sich durch den Kern und durch das auf dem Kern beidseitig angeordnete, nicht elektrisch leitfähige Material erstreckt, wobei das Durchführungselement gegenüber dem Kern elektrisch isoliert ist und elektrisch leitfähig mit dem mindestens einen Kontaktierungsabschnitt auf der ersten Seite und mit dem mindestens einen Kontaktierungsabschnitt auf der zweiten Seite verbunden ist, sodass eine elektrisch und thermisch leitfähige Verbindung der Kontaktierungsabschnitte auf der ersten Seite mit den Kontaktierungsabschnitten auf der zweiten Seite durch das Durchführungselement hergestellt wird und ein Wärmestrom durch den Kern aufgenommen und aus dem Leitergebildeelement abgeführt werden kann. Somit können in einer Batterie mit einem solchen Leitergebildeelement nicht nur ein elektrischer Strom und ein Wärmestrom in der Zellanordnung der Batterie verteilt werden, sondern auch durch den Kern aufgenommen werden. Hierdurch wird es ermöglicht, den Wärmestrom aus dem Leitergebildeelement und damit auch aus der Zellanordnung über den Kern abzuführen. Der Kern kann erfindungsgemäß aus dem Leitergebildeelement herausgeführt und thermisch leitfähig mit einer Wärmesenke verbunden sein. Alternativ kann der thermisch leitfähige Kern mit einem Wärmeabfuhrelement verbunden sein, das thermisch leitfähig mit einer Wärmesenke verbunden ist.

Die Batterie kann ferner so ausgestaltet sein, dass auf der ersten Seite des darin vorgesehenen Leitergebildeelements mindestens zwei Kontaktierungsabschnitte und ein elektrisch und thermisch leitfähiger Verbindungsabschnitt angeordnet sind, der die Kontaktierungsabschnitte auf der ersten Seite elektrisch und thermisch leitfähig miteinander verbindet, dass jedem Kontaktierungsabschnitt auf der ersten Seite eine elektrische Sicherung zugeordnet ist und dass der Verbindungsabschnitt mit jedem Kontaktierungsabschnitt über eine diesem Kontaktierungsabschnitt zugeordnete elektrische Sicherung verbunden ist, wobei der Verbindungsabschnitt mit dem mindestens einen Kontaktierungsabschnitt auf der zweiten Seite durch das elektrisch nicht leitfähige Material der Platine hindurch elektrisch leitfähig über ein elektrisch leitfähiges Durchführungselement verbunden ist, sodass jeder Kontaktierungsabschnitt auf der ersten Seite gegenüber jedem anderen Kontaktierungsabschnitt auf der ersten Seite des Leitergebildeelements und gegenüber jedem Kontaktierungsabschnitt auf der zweiten Seite des Leitergebildeelements durch mindestens eine elektrische Sicherung gesichert ist. Somit lassen sich die Batteriezellen gegenüber einander mittels des Leitergebildeelements elektrisch sichern. Dies ist insbesondere dann vorteilhaft, wenn ein Widerstand einer Batteriezelle aufgrund eines Fehlers zusammenbricht, sodass ein zu hoher Strom durch diese Batteriezelle fließt. In diesem Fall wird eine elektrische Sicherung ausgelöst, die einem Kontaktierungsabschnitt des Leitergebildeelements zugeordnet ist, der mit einem positiven oder mit einem negativen Endanschluss dieser Batteriezelle elektrisch und thermisch leitfähig verbunden ist. Dadurch wird diese fehlerhafte Batteriezelle von der Zellanordnung elektrisch isoliert.

Bevorzugt ist unter jedem Kontaktierungsabschnitt des Leitergebildeelements ein elastisches Material angeordnet, das unter Einwirkung einer Anpresskraft auf den Kontaktierungsabschnitt elastisch verformbar ist. Das elastische Material kann erfindungsgemäß in dem nicht leitfähigen Material des Leitergebildeelements unter dem Kontaktierungsabschnitt angeordnet sein. Wird eine Anpresskraft auf den Kontaktierungsabschnitt ausgeübt, so werden sowohl der Kontaktierungsabschnitt als auch das elastische Material deformiert. Somit ist es möglich, eine besonders gute elektrische und thermisch leitfähige Verbindung zwischen einem Kontaktierungsabschnitt und einer Batteriezelle herzustellen. Aufgrund der lokalen Deformierung des Leitergebildeelements kann dessen unerwünschte Verformung in weiteren Abschnitten oder gar eine Beschädigung des Leitergebildeelements vermieden werden, wenn Batteriezellen an die Kontaktierungsabschnitte herangedrückt werden. Gemäß einer alternativen Ausführungsform kann ein Material, aus dem der Kontaktierungsabschnitt besteht, elastisch ausgebildet sein. So kann ein Kontaktierungsabschnitt des Leitergebildeelements aus einem elastischen Material ausgebildet sein, das elektrisch und thermisch leitfähig ist.

Es ist ferner bevorzugt, wenn das Kontaktierungsabschnittselement, welches erfindungsgemäß als ein Leitergebildeelement ausgeführt ist, an seinen Kontaktierungsabschnitten Federelemente aufweist. Die Federelemente können aus einem elektrisch und thermisch leitfähigen Material bestehen, beispielsweise aus einem Metall. Die Federelemente sind elektrisch und thermisch leitfähig mit den Kontaktierungsabschnitten des Kontaktierungsabschnittselements verbunden. Aufgrund des gewählten Materials und ihres Aufbaus sind die Federelemente elastisch verformbar. Die Federelemente können gemäß möglichen Ausführungsformen der Erfindung Schraubenfedern oder auch ein Federn aus einem schwammartigen Material oder aus einem elastischen Gewebe sein. Sie dienen dazu, eine verbesserte Kontaktierung zwischen den Batteriezellen der Batterie und dem Kontaktierungsabschnittselement herzustellen. Außerdem erlauben sie einen Ausgleich der Anpresskräfte zwischen den Batteriezellen und den Kontaktierungsabschnittselementen innerhalb der Batterie, sodass einer ungewünschten abschnittsweisen Verformung des Kontaktierungsabschnittselements vorgebeugt wird. Ferner wird auch ein gleichmäßigerer Anpressdruck auf alle Batteriezellen eines Batterieabschnitts hergestellt, wenn die Zellanordnung verpresst wird. Dies ist wünschenswert, da hierdurch elektrische und thermische Übergangswiderstände zwischen den Batteriezellen und den Kontaktierungsabschnittselementen reduziert werden.

Weitere Ausführungsformen der Erfindung sind in den Zeichnungen dargestellt. Dabei zeigt:
Fig. 1 eine schematische Darstellung einer Zellanordnung einer erfindungsgemäßen Batterie,
Fig. 2 eine schematische Darstellung eines Abschnitts der Zellanordnung der Batterie gemäß Fig. 1 in einer Schnittansieht,
Fig. 3 eine schematische Darstellung eines als eine Platine ausgeführten Kontaktierungsabschnittselements in einer Ansicht auf eine erste Seite des Kontaktierungsabschnittselements,
Fig. 4 eine schematische Darstellung des Kontaktierungsabschnittselements gemäß Fig. 3 in einer Ansicht auf eine zweite Seite des Kontaktierungsabschnittselements,
Fig. 5 eine schematische Darstellung eines Querschnitts eines als eine Platine ausgeführten Kontaktierungsabschnittselements mit einer Durchführungsaussparung,
Fig. 6 eine schematische Darstellung eines flächig ausgebildeten Kontaktierungsabschnittselements mit daran anliegenden Batteriezellen in einer Seitenansicht,
Fig. 7 eine schematische Darstellung eines Kontaktierungsabschnitts mit stufenartig ausgebildeten Oberflächen mit daran anliegenden Batteriezellen in einer Seitenansicht,
Fig. 8 eine schematische Darstellung einer erfindungsgemäßen Batterie mit einem Gehäuse,
Fig. 9 eine schematische Darstellung eines als eine Platine ausgeführten Kontaktierungsabschnittselements mit einer kreisförmigen Anordnung von Zugelementaussparungen in einer Ansicht auf eine erste Seite des Kontaktierungsabschnittselements und
Fig. 10 eine schematische Darstellung eines als eine Platine ausgeführten Kontaktierungsabschnittselements mit einer verteilten Anordnung von Zugelementaussparungen in einer Ansicht auf eine erste Seite des Kontaktierungsabschnittselements.

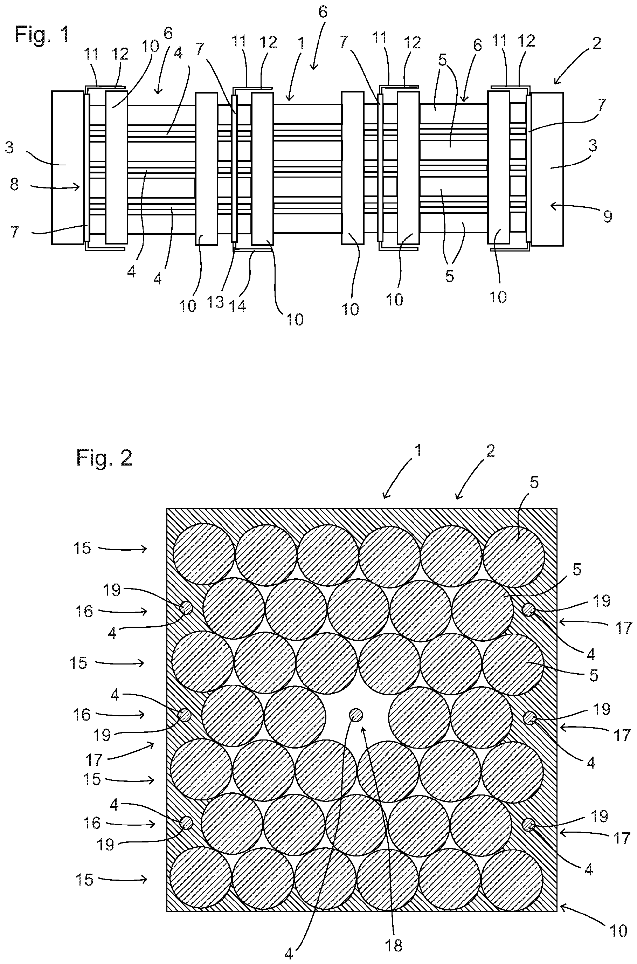

Fig. 1 zeigt eine schematische Darstellung einer Zellanordnung 1 einer Batterie 2. Die Batterie 2 weist Druckplatten 3 und Zugelemente 4 auf. In der Zellanordnung sind mehrere Batteriezellen 5 jeweils in einem Batterieabschnitt 6 nebeneinander angeordnet. Die in einem Batterieabschnitt 6 angeordneten Batteriezellen 5 sind miteinander parallel verschaltet. Eine parallele Verschaltung der Batteriezellen 5 wird durch Kontaktierungsabschnittselemente 7 ermöglicht. Hierzu sind Endanschlüsse der Batteriezellen 5 elektrisch und thermisch leitfähig mit den Kontaktierungsabschnittselementen 7 verbunden. Bedingt durch den Aufbau der Zellanordnung 1 können ein elektrischer Strom und ein thermischer Strom besonders gut über die gesamte Zellanordnung 1 verteilt werden.

Die Kontaktierungsabschnittselemente 7 sind jeweils zwischen zwei Batterieabschnitten 6 angeordnet. Jeder Batterieabschnitt 6 weist eine Höhe von sieben Batteriezellen 5 auf. Batteriezellen 5 benachbarter Batterieabschnitte 6 werden durch die zwischen ihnen angeordneten Kontaktierungsabschnittselemente 7 in Reihe geschaltet. Die Batteriezellen 5 in der Zellanordnung 1 sind somit sowohl parallel als seriell miteinander verschaltet.

Ein Batterieanfangsbereich 8 und ein Batterieendbereich 9 werden durch nicht gezeigte positive Endanschlüsse beziehungsweise durch nicht gezeigte negative Endanschlüsse von Batteriezellen 5 in der Batterie 2 gebildet. Der Batterieanfangsbereich 8 und der Batterieendbereich 9 sind mit äußeren Kontaktierungsabschnittselementen 7 verbunden. Die äußeren Kontaktierungsabschnittselemente 7 verbinden die Endanschlüsse der Batteriezellen 5 elektrisch und thermisch leitfähig. Auf einer dem Batterieanfangsbereich 8 beziehungsweise dem Batterieendbereich 9 abgewandten Seite der äußeren Kontaktierungsabschnittselemente 7 ist jeweils eine Druckplatte 3 angeordnet. Die Druckplatte 3 ist aus Kupfer ausgeführt. Somit ist sie besonders gut wärmeleitfähig.

Die Druckplatten 3 sind mittels der Zugelemente 4 miteinander verbunden. Die Zugelemente 4 sind dabei solchermaßen mit den Druckplatten 3 verschraubt, dass sie eine Zugkraft auf die Druckplatten 3 ausüben. Dadurch wird die Zellanordnung 1 zusammengedrückt. Insbesondere werden die Batteriezellen 5 an die Kontaktierungsabschnittselemente 7 gedrückt. Hierdurch wird zwischen den Endanschlüssen der Batteriezellen 5 und den Kontaktierungsabschnittselementen 7 eine Kontaktfläche vergrößert, sodass ein elektrischer und ein thermischer Strom besser zwischen den Batteriezellen 5 und den Kontaktierungsabschnittselementen 7 fließen und damit auch besser über die gesamte Zellanordnung 1 verteilt werden können. Dies trägt dazu bei, dass lokale thermische Hotspots innerhalb der Batterie 2 vermieden werden. Ferner ist aufgrund der erfindungsgemäßen, durch die Zugelemente 4 und die Druckplatten 3 bewirkten Verpressung der Zellanordnung 1 die erfindungsgemäße Batterie 2 besonders widerstandsfähig gegenüber mechanischen Belastungen.

Um zu gewährleisten, dass die Batteriezellen 5 sicher innerhalb der Zellanordnung 1 gehalten werden, sind die Batteriezellen 5 durch mehrere Positionierungsplatten 10 umschlossen. Die Positionierungsplatten 10 umschließen die Batteriezellen 5 in den Batterieabschnitten 6 formschlüssig. Da an den Kontaktierungsabschnittselementen 7 eine exakte Kontaktierung der Endanschlüsse der Batteriezellen 5 mit den Kontaktierungsabschnittselementen 7 notwendig ist, sind die Positionierungsplatten 10 vorliegend in der Nähe der Kontaktierungsabschnittselementen 7 angeordnet.

Bei den Kontaktierungsabschnittselementen 7 handelt es sich um Leitergebildeelemente, die vorliegend als flächige Platinen ausgebildet sind. Die Platinen weisen einen Kern 11 auf, der aus den Platinen seitlich herausgeführt ist.

Außerhalb der Platine bildet der Kern 11 ein Wärmeabfuhrelement 12. Über das Wärmeabfuhrelement 12 kann Wärme aus der Zellanordnung 1 abgeführt werden. Das Wärmeabfuhrelement 12 weist einen ersten flächigen Abschnitt 13 auf, der in einer Ebene des Kontaktierungsabschnittselements 7 liegt, sowie einen zweiten flächigen Abschnitt 14, der in einer weiteren Ebene liegt, die in einem rechten Winkel zu der Ebene des Kontaktierungsabschnittselements 7 ausgerichtet ist. Der zweite flächige Abschnitt 14 ist dazu geeignet, mit einem Gehäuse (nicht gezeigt) oder mit einer Wärmesenke (nicht gezeigt) thermisch leitfähig verbunden zu werden, sodass ein Wärmestrom aus das Kontaktierungsabschnittselement 7 auf das Gehäuse beziehungsweise auf die Wärmesenke abgeführt werden kann.

Fig. 2 zeigt eine schematische Darstellung eines Abschnitts der Zellanordnung 1 der Batterie 2 gemäß Fig. 1 in einer Schnittansicht. Dabei sind die Batteriezellen 5 in ersten Zellebenen 15 und zweiten Zellebenen 16 angeordnet. Die Batteriezellen 5 grenzen hierbei unmittelbar aneinander an. Die zweiten Zellebenen 16 weisen jeweils eine Batteriezelle 5 weniger auf als die ersten Zellebenen 15. Hierdurch ergeben sich äußere Durchtrittsabschnitte 17. Durch die äußeren Durchtrittsabschnitte 17 lassen sich Zugelemente 4 hindurchführen. Die äußeren Durchtrittsabschnitte 17 ermöglichen es, möglichst viele Batteriezellen 5 auf einer möglichst geringen Querschnittsfläche einer Zellanordnung 1 anzuordnen. Auf diese Weise werden zwei Durchtrittsabschnitte 17 in der zweiten Zellebene 16 gebildet, wobei die zweite Zellebene 16 lediglich eine Batteriezelle 5 weniger aufweist als die angrenzenden ersten Zellebenen 15. Durch die Entfernung der einen Batteriezelle 5 aus der zweiten Zellebene 16 entstehen zwei äußere Durchtrittsabschnitte 17. Durch jeden äußeren Durchtrittsabschnitt 17 können ein oder mehrere Zugelemente 4 hindurchgeführt werden. Vorliegend ist durch jeden äußeren Durchtrittsabschnitt 17 ein Zugelement 4 hindurchgeführt. Um eine gleichmäßige Stabilisierung der Zellanordnung 1 zu erreichen, ist vorliegend jedoch auch ein innerer Durchtrittsabschnitt 18 vorgesehen, in dem keine Batteriezelle 5 angeordnet ist. Durch den inneren Durchtrittsabschnitt 18 ist ein Zugelement 4 hindurchgeführt.

Die Batteriezellen 5 sind in dem Batterieabschnitt 6 von einer Positionierungsplatte 10 umschlossen. In der Positionierungsplatte 10 sind Zugelementaussparungen 19 vorgesehen, durch die die Zugelemente 4 in den äußeren Durchtrittsabschnitten 17 hindurchgeführt sind.

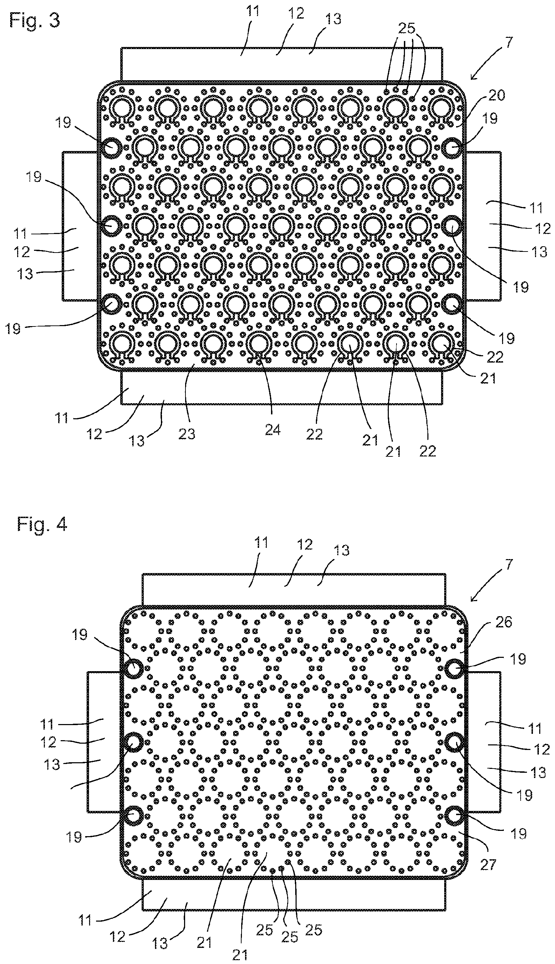

Fig. 3 zeigt eine schematische Darstellung eines als eine Platine ausgeführten Kontaktierungsabschnittselements 7 in einer Ansicht auf eine erste Seite 20 des Kontaktierungsabschnittselements 7. Es handelt sich vorliegend um ein Kontaktierungsabschnittselement 7 für eine Zellanordnung mit in ersten Zellebenen und zweiten Zellebenen versetzt angeordneten Batteriezellen. Das Kontaktierungsabschnittselement 7 ist hierbei für Zellanordnungen mit vier ersten und drei zweiten Zellebenen geeignet, wobei in den ersten und zweiten Zellebenen jeweils acht beziehungsweise sieben Batteriezellen angeordnet sind. Das Kontaktierungsabschnittselement 7 weist Zugelementaussparungen 19 auf, durch die Zugelemente hindurchgeführt werden können.

Das Kontaktierungsabschnittselement 7 ist teilweise aus einem elektrisch nicht leitfähigen Material ausgebildet. Auf das nicht elektrisch leitfähige Material ist auf der ersten Seite des Kontaktierungsabschnittselements 7 Kupfer als ein elektrisch und thermisch leitfähiges Material flächig aufgebracht. Das Kupfermaterial weist dabei mehrere Kontaktierungsabschnitte 21 auf. Diese sind zur Kontaktierung mit den Endanschlüssen der Batteriezellen geeignet. Zu diesem Zweck sind die Kontaktierungsabschnitte 21 erhaben ausgeführt. Die Kontaktierungsabschnitte 21 sind durch Isolierungsabschnitte 22 aus einem nicht elektrisch leitfähigen Material von einem Verbindungsabschnitt 23 getrennt. Der Verbindungsabschnitt 23 ist flächig ausgebildet. Er verbindet die Kontaktierungsabschnitte 21 miteinander elektrisch und thermisch leitfähig. Durch jeden Isolierungsabschnitt 22 ist eine elektrisch und thermisch leitfähige Leiterbahn 24 hindurchgeführt, die als eine Sicherung dimensioniert ist. Hierdurch werden die Kontaktierungsabschnitte 21 gegeneinander elektrisch gesichert.

Um jeden Isolierungsabschnitt 22 und damit auch um jeden Kontaktierungsabschnitt 21 sind mehrere Durchführungsaussparungen 25 kreisförmig angeordnet. In jeder Durchführungsaussparung 25 ist ein Durchführungselement (nicht gezeigt) angeordnet, das auf der Durchführungsaussparung 25 aufgebracht ist. Das Durchführungselement ist aus Kupfer ausgeführt und verbindet den Verbindungsabschnitt 23 der ersten Seite 20 des Kontaktierungsabschnittselements 7 mit einer zweiten Seite (nicht gezeigt) des Kontaktierungsabschnittselements 7 elektrisch und thermisch leitfähig. Ein aus einer Batteriezelle in einen Kontaktierungsabschnitt 21 fließender Strom kann somit durch die Leiterbahn 24 und das Kontaktierungsabschnittselement zu der zweiten Seite des Kontaktierungsabschnittselements 7 geführt werden.

In dem Kontaktierungsabschnittselement 7 befindet sich ein Kern 11 aus Aluminium. Der Kern 11 ist von den Kontaktierungsabschnitten 21 und von den Durchführungselementen elektrisch isoliert. Der Kern erstreckt sich teilweise seitlich in Bereiche außerhalb des Kontaktierungsabschnittselements 7. In diesen Bereichen außerhalb des Kontaktierungsabschnittselements 7 bildet der Kern 11 ein Wärmeabfuhrelement 12. Vorliegend sind vier Wärmeabfuhrelemente 12 mit jeweils einem ersten flächigen Abschnitt 13 dargestellt. Auch auf der zweiten Seite des Kontaktierungsabschnittselements 7 sind die zuvor beschriebenen Zugelementaussparungen 19 sichtbar, durch die Zugelemente 4 hindurchgeführt werden können.

Fig. 4 zeigt eine schematische Darstellung des Kontaktierungsabschnittselements 7 gemäß Fig. 3 in einer Ansicht auf eine zweite Seite 26 des Kontaktierungsabschnittselements 7. Auf der zweiten Seite 26 des Kontaktierungsabschnittselements 7 befindet sich eine als ein Verbindungs- und Kontaktierungsbereich 27 ausgebildete Kupferschicht. In dem Verbindungs- und Kontaktierungsbereich 27 sind Kontaktierungsabschnitte 21 angeordnet, die zur Kontaktierung mit Endanschlüssen von Batteriezellen geeignet sind. Um jeden Kontaktierungsabschnitt 21 sind mehrere Durchführungsaussparungen 25 kreisförmig angeordnet. Die Durchführungsaussparungen 25 sind in dem Kontaktierungsabschnittselement 7 wie vorangehend beschrieben ausgebildet.

Vorliegend sind ferner die vier Wärmeabfuhrelemente 12 mit jeweils einem ersten flächigen Abschnitt 13 dargestellt. Auch auf der zweiten Seite des Kontaktierungsabschnittselements 7 sind die Zugelementaussparungen 19 sichtbar, durch die Zugelemente hindurchgeführt werden können.

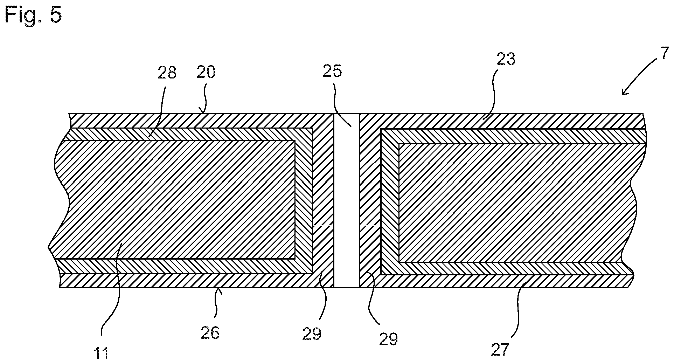

Fig. 5 zeigt eine schematische Darstellung eines Querschnitts eines als eine Platine ausgeführten Kontaktierungsabschnittselements 7 mit einer Durchführungsaussparung 25. Das Kontaktierungsabschnittselement 7 ist lediglich abschnittsweise dargestellt. Das Kontaktierungsabschnittselement 7 weist ein elektrisch nicht leitfähiges Substratmaterial 28 auf. Das Substratmaterial 28 umschließt einen Kern 11 aus Kupfer. Auf einer ersten Seite 20 des Kontaktierungsabschnittselements 7 bildet eine Kupferschicht einen Verbindungsabschnitt 23. Auf einer zweiten Seite 26 des Kontaktierungsabschnittselements 7 bildet eine Kupferschicht einen Verbindungs- und Kontaktierungsbereich 27. Eine Durchführungsaussparung 25 ist durch das Kontaktierungsabschnittselement 7 hindurchgeführt. Sie durchläuft dabei den Verbindungsabschnitt 23 und den Verbindungs- und Kontaktierungsbereich 27. Auf den Rand der Durchführungsaussparung 25 ist ein Durchführungselement 29 aus Kupfer flächig in einer dünnen Schicht aufgebracht. Das Durchführungselement 29 wird dabei durch das Substratmaterial 28 von dem Kern 11 elektrisch isoliert. Ein thermischer Strom kann jedoch das Substratmaterial 28 durchfließen und über den Kern 11 aus dem Kontaktierungsabschnittselement 7 abgeführt werden.

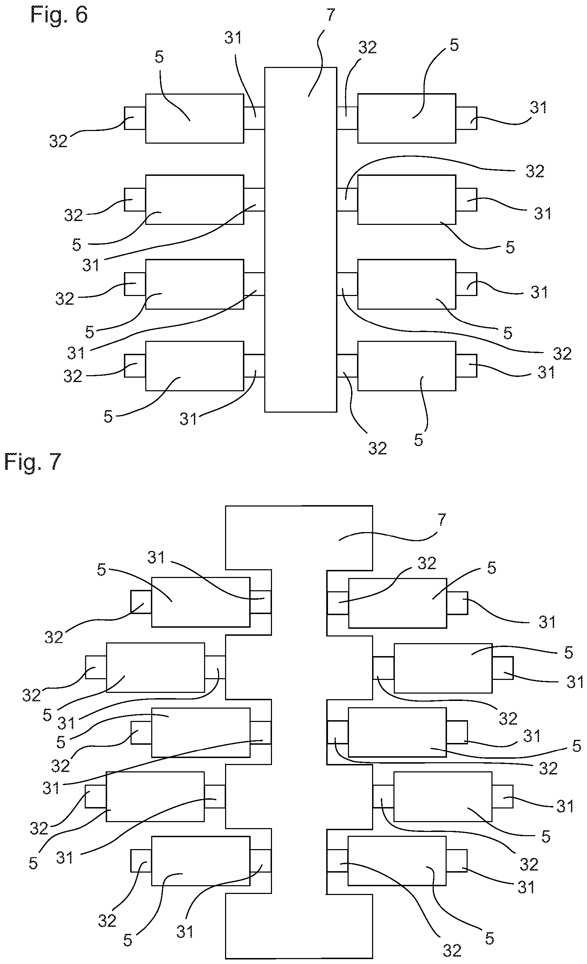

Fig. 6 zeigt eine schematische Darstellung eines flächig ausgebildeten Kontaktierungsabschnittselements 7 mit daran anliegenden Batteriezellen 5 in einer Seitenansicht. Die Batteriezellen 5 weisen positive Endanschlüsse 31 und negative Endanschlüsse 32 auf. Positive Endanschlüsse 31 und negative Endanschlüsse 32 der Batteriezellen 5 sind mit dem Kontaktierungsabschnittselement 7 elektrisch und thermisch leitfähig verbunden. Dazu liegen sie an nicht gezeigten Kontaktierungsabschnitten auf der ersten Seite und auf der zweiten Seite des Kontaktierungsabschnittselements 7 an. Gemäß der dargestellten Ausführungsform des Kontaktierungsabschnittselements 7 liegen die Kontaktierungsabschnitte, die mit positiven Endanschlüssen 31 verbunden sind, in einer gemeinsamen Ebene. Die Kontaktierungsabschnitte, die mit negativen Endanschlüssen 32 verbunden sind, liegen ebenfalls in einer gemeinsamen Ebene.

Fig. 7 zeigt eine schematische Darstellung eines Kontaktierungsabschnitts mit stufenartig ausgebildeten Oberflächen mit daran anliegenden Batteriezellen in einer Seitenansicht. Die Batteriezellen 5 weisen positive Endanschlüsse 31 und negative Endanschlüsse 32 auf. Positive Endanschlüsse 31 und negative Endanschlüsse 32 der Batteriezellen 5 sind mit dem Kontaktierungsabschnittselement 7 elektrisch und thermisch leitfähig verbunden. Dazu liegen sie an nicht gezeigten Kontaktierungsabschnitten auf der ersten Seite und auf der zweiten Seite des Kontaktierungsabschnittselements 7 an. Gemäß der gezeigten Ausführungsform des Kontaktierungsabschnittselements 7 liegen die Kontaktierungsabschnitte, die mit positiven Endanschlüssen 31 verbunden sind, in zwei unterschiedlichen Ebenen, da die erste Seite des Kontaktierungsabschnittselements 7 stufenartig ausgebildet ist. Die Kontaktierungsabschnitte des Kontaktierungsabschnittselements 7, die mit negativen Endanschlüssen 32 verbunden sind, liegen ebenfalls in zwei unterschiedlichen Ebenen, da auch die zweite Seite des Kontaktierungsabschnittselements 7 stufenartig ausgebildet ist.

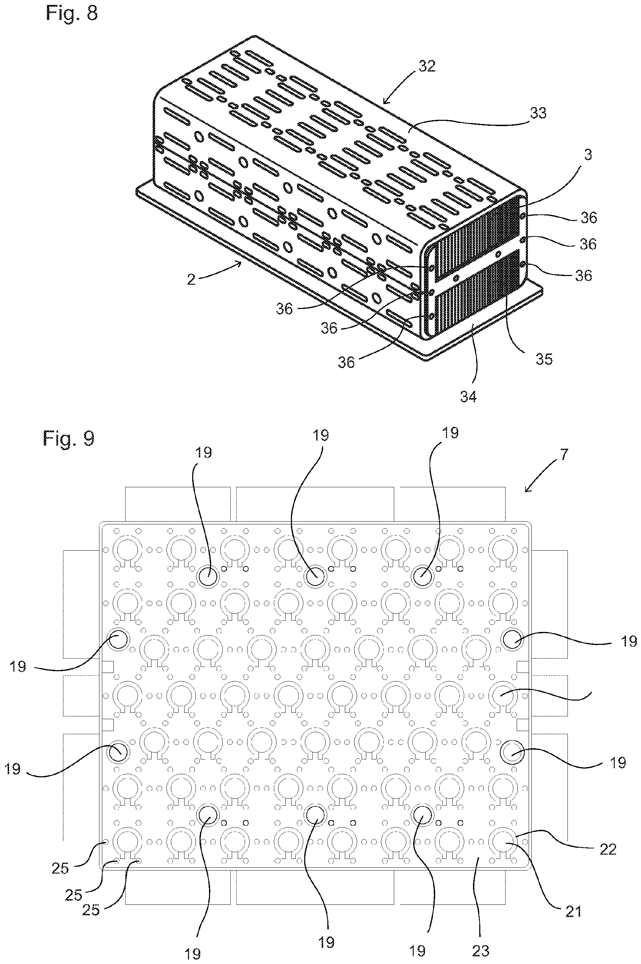

Fig. 8 zeigt eine schematische Darstellung einer erfindungsgemäßen Batterie 2 mit einem Gehäuse 33. Das Gehäuse 33 ist aus Aluminium ausgeführt und umschließt eine erfindungsgemäße Zellanordnung mit Kontaktierungsabschnittselementen. Dabei sind innerhalb des Gehäuses 33 Wärmeabfuhrelemente mit dem Gehäuse 33 verbunden, sodass ein thermischer Strom aus der Zellanordnung auf das Gehäuse 33 abgeführt werden kann. Das Gehäuse 33 ist fest mit einer Halteplatte 34 verbunden, die als Wärmesenke dient. Das Gehäuse 33 ist an zwei Stirnseiten durch Druckplatten 3 verschlossen. Die Druckplatten 3 weisen Kühlrippen 35 auf, sodass die Druckplatten 3 dazu beitragen, die Zellanordnung innerhalb des Gehäuses 35 zu kühlen. Nicht gezeigte Zugelemente sind durch die Druckplatten 3 hindurchgeführt und mittels Muttern 36 mit den Druckplatten 3 verschraubt. Die Druckplatten 3 sind von den Zugelementen elektrisch isoliert.

Fig. 9 zeigt eine schematische Darstellung eines als eine Platine ausgeführten Kontaktierungsabschnittselements 7 mit einer kreisförmigen Anordnung von Zugelementaussparungen 19 in einer Ansicht auf eine erste Seite des Kontaktierungsabschnittselements 7. Das Kontaktierungsabschnittselement weist Kontaktierungsabschnitte 21, Isolierungsabschnitte 22, einen Verbindungsabschnitt 23 und Durchführungsaussparungen 25 auf, die wie bei dem Kontaktierungsabschnittselement 7 aus Fig. 3 ausgebildet sind. Das Kontaktierungsabschnittselement 7 weist ferner Zugelementaussparungen 19 auf. Die Zugelementaussparungen 19 sind im Wesentlichen kreisförmig in dem Kontaktierungsabschnittselement 7 angeordnet. Es hat sich herausgestellt, dass bei einer solchen Anordnung Kräfte auf das Kontaktierungsabschnittselement 7 gleichmäßiger verteilt werden, als wenn die Zugelementaussparungen 19 lediglich in Randbereichen des Kontaktierungsabschnittselements 7 angeordnet sind. Durch die gezeigte Anordnung der Zugelementaussparungen 19 wird es vermieden, dass sich das Kontaktierungsabschnittselement 7 beim Verpressen der Zellanordnung verbiegt. Ein Verbiegen könnte dazu führen, dass unter Umständen einzelne Batteriezellen innerhalb einer Zellanordnung schlechter oder gar nicht mehr kontaktiert werden. Die gezeigte Anordnung der Zugelementaussparungen 19 ist somit besonders vorteilhaft.

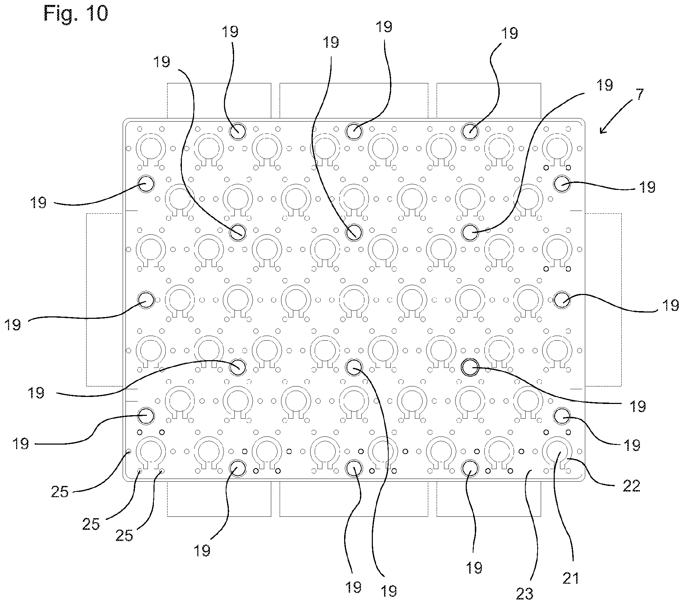

Fig. 10 zeigt eine schematische Darstellung eines als eine Platine ausgeführten Kontaktierungsabschnittselements 7 mit einer verteilten Anordnung von Zugelementaussparungen 19 in einer Ansicht auf eine erste Seite des Kontaktierungsabschnittselements 7. Das Kontaktierungsabschnittselement 7 weist Kontaktierungsabschnitte 21, Isolierungsabschnitte 22, einen Verbindungsabschnitt 23 und Durchführungsaussparungen 25 auf, die wie bei dem Kontaktierungsabschnittselement 7 aus Fig. 3 ausgebildet sind. Das Kontaktierungsabschnittselement 7 weist ferner Zugelementaussparungen 19 auf. Die Zugelementaussparungen 19 sind in dem Kontaktierungsabschnittselement 7 verteilt angeordnet. Es hat sich herausgestellt, dass bei einer solchen Anordnung Kräfte auf das Kontaktierungsabschnittselement 7 gleichmäßiger verteilt werden, als wenn die Zugelementaussparungen 19 lediglich in Randbereichen des Kontaktierungsabschnittselements 7 angeordnet sind. Durch die gezeigte Anordnung der Zugelementaussparungen 19 wird es vermieden, dass sich das Kontaktierungsabschnittselement 7 beim Verpressen der Zellanordnung verbiegt. Ein Verbiegen könnte dazu führen, dass unter Umständen einzelne Batteriezellen innerhalb einer Zellanordnung schlechter oder gar nicht mehr kontaktiert werden. Die gezeigte Anordnung der Zugelementaussparungen 19 ist hat sich deshalb als vorteilhaft erwiesen.

### BEZUGSZEICHENLISTE

1. Zellanordnung
2. Batterie
3. Druckplatte
4. Zugelement
5. Batteriezelle
6. Batterieabschnitt
7. Kontaktierungsabschnittselement
8. Batterieanfangsbereich
9. Batterieendbereich
10. Positionierungsplatte
11. Kern
12. Wärmeabfuhrelement
13. Erster flächiger Abschnitt des Wärmeabfuhrelements
14. Zweiter flächiger Abschnitt des Wärmeabfuhrelements
15. Erste Zellebene
16. Zweite Zellebene
17. Äußerer Durchtrittsabschnitt
18. Innerer Durchtrittsabschnitt
19. Zugelementaussparung
20. Erste Seite des Kontaktierungsabschnittselements
21. Kontaktierungsabschnitt
22. Isolierungsabschnitt
23. Verbindungsabschnitt
24. Leiterbahn
25. Durchführungsaussparung
26. Zweite Seite des Kontaktierungsabschnittselements
27. Verbindungs- und Kontaktierungsbereich
28. Substratmaterial
29. Durchführungselement
30. Elastisches Material
31. Positiver Endanschluss
32. Negativer Endanschluss
33. Gehäuse
34. Halteplatte
35. Kühlrippen
36. Mutter

## Patentansprüche

1. Batterie (2) mit einer Zellanordnung (1), wobei die Zellanordnung (1) mehrere Batteriezellen (5) aufweist, wobei die Zellanordnung (1) mindestens zwei Batterieabschnitte (6) aufweist und jeder Batterieabschnitt (6) aus mehreren Batteriezellen (5) besteht, wobei jede Batteriezelle (5) einen ersten und einen zweiten Endanschluss aufweist und wobei zwischen dem ersten und dem zweiten Endanschluss jeder Batteriezelle (5) eine Batteriezellenlängsachse verläuft, wobei die Batteriezellenlängsachsen jedes Batterieabschnitts (6) jeweils parallel zueinander angeordnet sind, und wobei die Batterieabschnitte (6) benachbart zueinander angeordnet sind,
wobei zwischen mindestens zwei benachbarten Batterieabschnitten (6) ein zumindest teilweise elektrisch und thermisch leitfähiges Kontaktierungsabschnittselement (7) mit einer ersten Seite (20)und einer zweiten Seite (26) angeordnet ist, das auf der ersten Seite (20) und auf der zweiten Seite (26) jeweils mindestens einen elektrisch und thermisch leitfähigen Kontaktierungsabschnitt (21) aufweist, wobei die Batterieabschnitte (6) so zueinander angeordnet sind, dass jedem Batterieabschnitt (6) eine Ebene zugeordnet werden kann, die senkrecht zu den Batteriezellenlängsachsen der Batteriezellen (5) des Batterieabschnitts (6) durch mindestens eine der Batteriezellen (5) des Batterieabschnitts (6) verläuft und wobei durch diese Ebene zu dem Batterieabschnitt (6) benachbarte Batterieabschnitte (6) nicht geschnitten werden, wobei die der ersten Seite (20) dieses Kontaktierungsabschnittselements (7) zugewandten Endanschlüsse elektrisch und thermisch leitfähig mit dem mindestens einen Kontaktierungsabschnitt (21) dieser ersten Seite (20) verbunden sind, wobei die der zweiten Seite (26) dieses Kontaktierungsabschnittselements (7) zugewandten Endanschlüsse elektrisch und thermisch leitfähig mit dem mindestens einen Kontaktierungsabschnitt (21) dieser zweiten Seite (26) verbunden sind und wobei Endanschlüsse der Batteriezellen (5) über das Kontaktierungsabschnittselement (7) elektrisch und thermisch leitfähig miteinander verbunden sind, sodass ein elektrischer Strom und ein Wärmestrom über die gesamte Zellanordnung (1) verteilt werden, wobei das Kontaktierungsabschnittselement (7) als ein Leitergebildeelement ausgebildet ist, das teilweise aus einem nicht elektrisch leitfähigen Material besteht, wobei das Leitergebildeelement auf einer ersten Seite (20) und auf einer zweiten Seite (26) jeweils mindestens einen elektrisch und thermisch leitfähigen Kontaktierungsabschnitt (21) aufweist, und wobei jeder Kontaktierungsabschnitt (21) mit jedem anderen Kontaktierungsabschnitt (21) elektrisch und thermisch leitfähig verbunden ist,
**dadurch gekennzeichnet, dass**
in dem nicht elektrisch leitfähigen Material des Leitergebildeelements ein Kern (11) aus einem elektrisch und thermisch leitfähigen Material angeordnet ist, wobei auf dem Kern (11) abgewandten Seiten des nicht elektrisch leitfähigen Materials jeweils der mindestens eine Kontaktierungsabschnitt (21) angeordnet ist, und wobei mindestens ein elektrisch und thermisch leitfähiges Durchführungselement (29) sich durch den Kern (11) und durch das auf dem Kern (11) beidseitig angeordnete, nicht elektrisch leitfähige Material erstreckt,
wobei das Durchführungselement (29) gegenüber dem Kern (11) elektrisch isoliert ist und elektrisch leitfähig mit dem mindestens einen Kontaktierungsabschnitt (21) auf der ersten Seite (20) und mit dem mindestens einen Kontaktierungsabschnitt (21) auf der zweiten Seite (26) verbunden ist, sodass eine elektrisch und thermisch leitfähige Verbindung der Kontaktierungsabschnitte (21) auf der ersten Seite (20) mit den Kontaktierungsabschnitten (21) auf der zweiten Seite (26) durch das Durchführungselement (29) hergestellt wird und ein Wärmestrom durch den Kern (11) aufgenommen und aus dem Leitergebildeelement abgeführt werden kann.

2. Batterie (2) nach Anspruch 1, **dadurch gekennzeichnet, dass** die mit dem mindestens einen Kontaktierungsabschnitt (21) der ersten Seite (20) verbundenen Endanschlüsse untereinander über das Kontaktierungsabschnittselement (7) elektrisch und thermisch leitfähig miteinander verbunden sind, wobei die mit dem mindestens einen Kontaktierungsabschnitt (21) der zweiten Seite (26) verbundenen Endanschlüsse untereinander über das Kontaktierungsabschnittselement (7) elektrisch und thermisch leitfähig miteinander verbunden sind, und wobei die mit dem mindestens einen Kontaktierungsabschnitt (21) der ersten Seite (20) verbundenen Endanschlüsse elektrisch und thermisch leitfähig mit den mit dem mindestens einen Kontaktierungsabschnitt (21) der zweiten Seite (26) verbundenen Endanschlüssen über das Kontaktierungsabschnittselement (7) verbunden sind, sodass die Batteriezellen (5) in einer elektrischen Reihen- und Parallelschaltung elektrisch leitfähig miteinander verbunden sind und außerdem thermisch leitfähig miteinander verbunden sind.

3. Batterie (2) nach einem der vorhergehenden Ansprüche, **dadurch gekennzeichnet, dass** benachbarte Batterieabschnitte (6) voneinander in Richtung einer Batteriezellenlängsachse eines der benachbarten Batterieabschnitte (6) beabstandet sind.

4. Batterie (2) nach einem der vorhergehenden Ansprüche, **dadurch gekennzeichnet, dass** die Batteriezellen (5) benachbarter Batterieabschnitte (6) so angeordnet sind, dass mindestens eine durch eine Batteriezelle (5) eines Batterieabschnitts (6) verlaufende Achse, die parallel zu einer Batteriezellenlängsachse dieser Batteriezelle (5) verläuft, eine Batteriezelle (5) in einem benachbarten Batterieabschnitt (6) schneidet.

5. Batterie (2) nach einem der vorhergehenden Ansprüche, **dadurch gekennzeichnet, dass** die Batteriezellen (5) benachbarter Batterieabschnitte (6) zueinander gegenüberliegend an einem Kontaktierungsabschnittselement (7) anliegen.

6. Batterie (2) nach einem der vorhergehenden Ansprüche, **dadurch gekennzeichnet, dass** die Batteriezellen (5) aller Batterieabschnitte (6) der Batterie (2) zueinander parallel ausgerichtete Batteriezellenlängsachsen aufweisen.

7. Batterie (2) nach Anspruch 6, **dadurch gekennzeichnet, dass** die Batterieabschnitte (6) der Batterie (2) hintereinander entlang einer Batterieachse angeordnet sind, die parallel zu den Batteriezellenlängsachsen verläuft.

8. Batterie (2) nach Anspruch 7, **dadurch gekennzeichnet, dass** alle Batterieabschnitte der Batterie in einem Batterieraum liegen, wobei ein Batterieraumquerschnitt des Batterieraums senkrecht zur Batterieachse einem maximalen Batterieabschnittsquerschnitt einer Batterieabschnittsumhüllenden eines Batterieabschnitts senkrecht zur Batterieachse entspricht, wobei der maximale Batterieabschnittsquerschnitt der Batterieabschnittsquerschnitt eines Batterieabschnitts ist, der sämtliche Batterieabschnittsquerschnitte aller Batterieabschnitte entlang der Batterieachse einschließt.

9. Batterie (2) nach einem der vorhergehenden Ansprüche, **dadurch gekennzeichnet, dass** die ersten Endanschlüsse der Batteriezellen (5) Batteriepluspole und die zweiten Endanschlüsse der Batteriezellen (5) Batterieminuspole bilden, wobei die Batteriezellen (5) eines Batterieabschnitts (6) mit einem Kontaktierungsabschnittselement (7) jeweils ausschließlich über Batteriepluspole oder ausschließlich über Batterieminuspole verbunden sind.

10. Batterie (2) nach einem der vorhergehenden Ansprüche, **dadurch gekennzeichnet, dass** das Kontaktierungsabschnittselement (7) plattenförmig ausgebildet ist.

11. Batterie (2) nach einem der vorhergehenden Ansprüche, **dadurch gekennzeichnet, dass** das Kontaktierungsabschnittselement (7) flächige Abschnitte aufweist, die stufenartig voneinander versetzt an dem Kontaktierungsabschnittselement (7) angeordnet sind.

12. Batterie (2) nach einem der vorhergehenden Ansprüche, **dadurch gekennzeichnet, dass** an einem Batterieanfangsbereich (8) und einem Batterieendbereich (9) der Zellanordnung (1) jeweils eine Druckplatte (3) angeordnet ist, wobei die Druckplatten (3) über Zugelemente (4) miteinander verbunden sind und dadurch die an dem mindestens einen Kontaktierungsabschnittselement (7) anliegenden Batteriezellen (5) an das mindestens eine Kontaktierungsabschnittselement (7) andrücken, und wobei der Batterieanfangsbereich (8) und der Batterieendbereich (9) durch Endanschlüsse an einem ersten Ende und an einem zweiten Ende der Zellanordnung (1) definiert werden.

13. Batterie (2) nach einem der vorhergehenden Ansprüche, **dadurch gekennzeichnet, dass** in der Zellanordnung (1) mindestens eine Positionierungsplatte (10) angeordnet ist, durch die die Batteriezellen (5) des Batterieabschnitts (6) hindurchgeführt sind, wobei die Positionierungsplatte (10) mindestens eine Aussparung zur Durchführung von mindestens einer Batteriezelle (5) aufweist, und dass die Aussparung durch eine Hüllkurve um die Batteriezellen (5) des Batterieabschnitts (6) definiert wird, wobei die Aussparung die mindestens eine Batteriezellen (5) formschlüssig umgreift, um die mindestens eine Batteriezelle (5) innerhalb der Batterie (2) zu positionieren und zu stabilisieren.

14. Batterie (2) nach einem der vorhergehenden Ansprüche, **dadurch gekennzeichnet, dass** mindestens ein Kontaktierungsabschnittselement (7) thermisch leitfähig über ein Wärmeabfuhrelement (12) mit einer Wärmesenke verbunden ist und/oder
dass die Zellanordnung (1) von einem thermisch leitfähigen Gehäuse (33) umschlossen ist, insbesondere wobei das Wärmeabfuhrelement (12) mit dem Gehäuse (33) verbunden ist.

15. Batterie (2) nach einem der vorhergehenden Ansprüche, **dadurch gekennzeichnet, dass** auf der ersten Seite (20) des Leitergebildeelements mindestens zwei Kontaktierungsabschnitte (21) und ein elektrisch und thermisch leitfähiger Verbindungsabschnitt (23) angeordnet sind, der die Kontaktierungsabschnitte (21) auf der ersten Seite (20) elektrisch und thermisch leitfähig miteinander verbindet, dass jedem Kontaktierungsabschnitt (21) auf der ersten Seite (20) eine elektrische Sicherung (24) zugeordnet ist und dass der Verbindungsabschnitt (23) mit jedem Kontaktierungsabschnitt (21) über eine diesem Kontaktierungsabschnitt (21) zugeordnete elektrische Sicherung (24) verbunden ist, wobei der Verbindungsabschnitt (23) mit dem mindestens einen Kontaktierungsabschnitt (21) auf der zweiten Seite (26) durch das nichtleitende Material des Leitergebildeelements hindurch elektrisch leitfähig über ein elektrisch leitfähiges Durchführungselement (29) verbunden ist, sodass jeder Kontaktierungsabschnitt (21) auf der ersten Seite (20) gegenüber jedem anderen Kontaktierungsabschnitt (21) auf der ersten Seite (20) des Leitergebildeelements und gegenüber jedem Kontaktierungsabschnitt (21) auf der zweiten Seite (26) des Leitergebildeelements durch mindestens eine elektrische Sicherung gesichert ist.

## Claims

1. Battery (2) having a cell arrangement (1), wherein the cell arrangement (1) has a plurality of battery cells (5), wherein the cell arrangement (1) has at least two battery sections (6) and each battery section (6) consists of a plurality of battery cells (5), wherein each battery cell (5) has a first and a second end terminal and wherein between the first and the second end terminal of each battery cell (5) a battery cell longitudinal axis extends, wherein the battery cell longitudinal axes of each battery section (6) are each arranged parallel to each other, and wherein the battery sections (6) are arranged adjacent to each other, wherein between at least two adjacent battery sections (6), an at least partially electrically and thermally conductive contacting section element (7) having a first side (20) and a second side (26) is arranged, that has each on the first side (20) and on the second side (26) at least one electrically and thermally conductive contacting section (21), wherein the battery sections (6) are arranged relative to each other such that to each battery section (6) a plane can be assigned that extends perpendicular to the battery cell longitudinal axes of the battery cells (5) of the battery section (6) through at least one of the battery cells (5) of the battery section (6), and wherein battery sections (6) adjacent to the battery section (6) are not intersected by this plane, wherein the end terminals facing the first side (20) of that contacting section element (7) are electrically and thermally conductively connected to the at least one contacting section (21) of this first side (20), wherein the end terminals facing the second side (26) of this contacting section element (7) are electrically and thermally conductively connected to the at least one contacting section (21) of this second side (26), and wherein end terminals of the battery cells (5) are electrically and thermally conductively connected to each other via the contacting section element (7) such that an electric current and a heat flow are distributed throughout the entire cell assembly (1),
wherein the contacting section element (7) is formed as a conductor structure element partially made of a non-electrically conductive material, the conductor structure element having each on a first side (20) and on a second side (26) at least one electrically and thermally conductive contacting section (21), and
wherein each contacting section (21) is electrically and thermally conductively connected to each other contacting section (21),
**characterized in that**
in the non-electrically conductive material of the conductor structure element, a core (11) made of an electrically and thermally conductive material is arranged, wherein on the sides of the non-electrically conductive material facing away from the core (11) in each case the at least one contacting section (21) is arranged, and wherein at least one electrically and thermally conductive lead-through element (29) extends through the core (11) and through the non-electrically conductive material arranged on both sides of the core (11), wherein the lead-through element (29) is electrically insulated from the core (11) and is electrically conductively connected to the at least one contacting section (21) on the first side (20) and to the at least one contacting section (21) on the second side (26), such that an electrically and thermally conductive connection of the contacting sections (21) on the first side (20) to the contacting sections (21) on the second side (26) is produced via the lead-through element (29) and a heat flow can be picked up and dissipated from the conductor structure element by means of the core (11).

2. Battery (2) according to Claim 1, **characterized in that** the end terminals connected to the at least one contacting section (21) of the first side (20) are interconnected electrically and thermally conductively with one another via the contacting section element (7), wherein the end terminals connected to the at least one contacting section (21) of the second side (26) are interconnected electrically and thermally conductively with one another via the contacting section element (7), and wherein the end terminals connected to the at least one contacting section (21) of the first side (20) are electrically and thermally conductively connected to the at least one contacting section (21) of the second side (26) via the contacting section element (7), such that the battery cells (5) are electrically conductively connected to each other in an electrical series and parallel connection and are also thermally conductively connected to each other.

3. Battery (2) according to one of the preceding claims, **characterized in that** adjacent battery sections (6) are spaced apart from one another in the direction of a battery cell longitudinal axis of one of the adjacent battery sections (6).

4. Battery (2) according to one of the preceding claims, **characterized in that** the battery cells (5) of adjacent battery sections (6) are arranged such that at least one axis extending through a battery cell (5) of a battery section (6), which axis extends parallel to a battery cell longitudinal axis of this battery cell (5), intersects a battery cell (5) in an adjacent battery section (6).

5. Battery (2) according to one of the preceding claims, **characterized in that** the battery cells (5) of adjacent battery sections (6) abut opposite of each other to a contacting section element (7).

6. Battery (2) according to one of the preceding claims, **characterized in that** the battery cells (5) of all battery sections (6) of the battery (2) have battery cell longitudinal axes aligned parallel to each other.

7. Battery (2) according to claim 6, **characterized in that** the battery sections (6) of the battery (2) are arranged one behind the other along a battery axis, which runs parallel to the battery cell longitudinal axes.

8. Battery (2) according to claim 7, **characterized in that** all battery sections of the battery lie in a battery compartment, wherein a battery compartment cross-section of the battery compartment perpendicular to the battery axis corresponds to a maximum battery section cross-section of a battery section envelope of a battery section perpendicular to the battery axis, wherein the maximum battery section cross-section is the battery section cross-section of a battery section that includes all battery section cross-sections of all battery sections along the battery axis.

9. Battery (2) according to one of the preceding claims, **characterized in that** the first end terminals of the battery cells (5) form battery plus terminals and the second end terminals of the battery cells (5) form battery minus terminals, wherein the battery cells (5) of a battery section (6) are each connected to a contacting section element (7) exclusively via battery plus terminals or exclusively via battery minus terminals.

10. Battery (2) according to one of the preceding claims, **characterized in that** the contacting section element (7) is configured plate-shaped.

11. Battery (2) according to one of the preceding claims, **characterized in that** the contacting section element (7) has flat sections which are arranged stepwise offset from each other on the contacting section element (7).

12. Battery (2) according to one of the preceding claims, **characterized in that** a pressure plate (3) is arranged at each of a battery start region (8) and a battery end region (9) of the cell arrangement (1), wherein the pressure plates (3) are connected to each other via tension elements (4), and thereby the battery cells (5) abutting to the at least one contacting segment element (7) are pressed to the at least one contacting segment element (7), and wherein the battery start region (8) and the battery end region (9) are defined by end terminals at a first end and a second end of the cell assembly (1).

13. Battery (2) according to one of the preceding claims, **characterized in that** in the cell assembly (1), at least one positioning plate (10) is arranged, through which the battery cells (5) of the battery section (6) are passed, wherein the positioning plate (10) has at least one recess for passing through at least one battery cell (5), and that the recess is defined by an envelope around the battery cells (5) of the battery section (6), wherein the recess engages around the at least one battery cell (5) in a form-fit to position and stabilize the at least one battery cell (5) within the battery (2).

14. Battery (2) according to one of the preceding claims, **characterized in that** at least one contacting section element (7) is thermally conductively connected to a heat sink via a heat dissipation element (12) and/or **in that** the cell arrangement (1) is surrounded by a thermally conductive housing (33), in particular wherein the heat dissipation element (12) is connected to the housing (33).

15. Battery (2) according to one of the preceding claims, **characterized in that** at least two contacting sections (21) and an electrically and thermally conductive connecting section (23) are arranged on the first side (20) of the conductor structure element, which connecting section (23) electrically and thermally conductively connects the contacting sections (21) on the first side (20) to each other, that each contacting section (21) on the first side (20) is associated with an electrical fuse (24), and that the connecting section (23) is connected to each contacting section (21) via an electrical fuse (24) associated with this contacting section (21), wherein the connecting section (23) is connected with the at least one contacting section (21) on the second side (26) electrically conductively through the non-conducting material of the conductor structure element via an electrically conductive lead-through element (29), such that each contacting section (21) on the first side (20) is secured to each other contacting section (21) on the first side (20) of the conductor structure element and to each contacting section (21) on the second side (26) of the conductor structure element by at least one electrical fuse.

## Revendications

1. Batterie (2) ayant un arrangement de cellules (1), l'arrangement de cellules (1) comprenant une pluralité de cellules de batterie (5), l'arrangement de cellules (1) comprenant au moins deux sections de batterie (6) et chaque section de batterie (6) consistant en une pluralité de cellules de batterie (5), où chaque cellule de batterie (5) présente des première et seconde connexions d'extrémité, et où un axe longitudinal de cellule de batterie s'étend entre les première et seconde connexions d'extrémité de chaque cellule de batterie (5), où les axes longitudinaux de cellule de batterie de chaque section de batterie (6) sont respectivement disposés parallèlement entre eux, et où les sections de batterie (6) sont disposées de façon adjacente l'une à l'autre,
où un élément de section de contact (7) au moins partiellement électriquement et thermiquement conducteur ayant un premier côté (20) et un second côté (26) est agencé entre au moins deux sections de batterie adjacentes (6), ledit élément de section de contact ayant sur le premier côté (20) et sur le second côté (26) respectivement au moins une section de contact (21) électriquement et thermiquement conductrice, où les sections de batterie (6) sont agencées l'une par rapport à l'autre de telle sorte que chaque section de batterie (6) puisse se voir attribuer un plan perpendiculaire aux axes longitudinaux des cellules de batterie (5) de la section de batterie (6) à travers au moins une des cellules de batterie (5) de la section de batterie (6), et où les sections de batterie (6) adjacentes à la section de batterie (6) ne sont pas découpées à travers ce plan, les connexions d'extrémité faisant face à la première côté (20) de cet élément de section de contact (7) étant reliées électriquement et thermiquement de manière conductrice à l'au moins une section de contact (21) de cette première côté (20), les connexions d'extrémité faisant face à la second côté (26) de cet élément de section de contact (7) étant reliées électriquement et thermiquement conductrices à ladite au moins une section de contact (21) de cette second côté (26), et les connexions d'extrémité des cellules de batterie (5) étant reliées électriquement et thermiquement conductrices l'une à l'autre via l'élément de section de contact (7), afin qu'un courant électrique et un courant thermique soient distribués sur tout l'arrangement des cellules (1),
où l'élément de section de contact (7) est formé en tant qu'élément de structure conducteur constitué en partie d'un matériau non conducteur d'électricité, où l'élément de structure conducteur présente sur un premier côté (20) et sur un second côté (26) au moins une section de contact (21) électriquement et thermiquement conductrice, respectivement, et où chaque section de contact (21) est reliée électriquement et thermiquement de manière conductrice à l'autre section de contact (21),
**caractérisé en ce qu'**
un noyau (11) en un matériau électriquement et thermiquement conducteur est disposé dans le matériau non conducteur de l'élément de structure conducteur, où, dans chaque cas, l'au moins une section de contact (21) étant disposée sur les côtés du matériau non conducteur de l'électricité opposée au noyau (11), et au moins un élément de passage (29) conducteur de l'électricité et de la chaleur traversant le noyau (11) et le matériau non conducteur de l'électricité disposé des deux côtés du noyau (11), où l'élément de passage (29) est isolé électriquement du noyau (11) et connecté électriquement de manière conductrice à l'au moins une section de contact (21) sur le premier côté (20) et à l'au moins une section de contact (21) sur le second côté (26), de sorte qu'une liaison électriquement et thermiquement conductrice des sections de contact (21) du premier côté (20) avec les sections de contact (21) du second côté (26) est réalisée par l'élément de passage (29) et un flux de chaleur peut être reçu à travers le noyau (11) et dissipé de l'élément conducteur.

2. Batterie (2) selon la revendication 1, **caractérisée en ce que** les connexions d'extrémité reliées à l'au moins une section de contact (21) de la première côté (20) sont reliées électriquement et thermiquement conductrices l'une à l'autre via l'élément de section de contact (7), les connexions d'extrémité reliées à l'au moins une section de contact (21) de la second côté (26) étant reliées électriquement et thermiquement conductrices l'une à l'autre via l'élément de section de contact (7), et où les connexions d'extrémité connectées à l'au moins une section de contact (21) du premier côté (20) sont connectées électriquement et thermiquement conductrices aux connexions d'extrémité connectées à l'au moins une section de contact (21) du second côté (26) via l'élément de section de contact (7) de sorte que les cellules de batterie (5) sont connectés électriquement conducteurs les uns aux autres en série et parallèlement et sont également connectés thermiquement conducteurs entre eux.

3. Batterie (2) selon l'une des revendications précédentes, **caractérisée en ce que** des sections de batterie adjacentes (6) sont espacées l'une de l'autre dans la direction d'un axe longitudinal de cellule de batterie de l'une des sections de batterie adjacentes (6).

4. Batterie (2) selon l'une des revendications précédentes, **caractérisée en ce que** les cellules de batterie (5) de sections de batterie adjacentes (6) sont disposées de telle sorte qu'au moins un axe traversant une cellule de batterie (5) d'une section de batterie (6) et parallèle à un axe longitudinal de cellule de batterie de ladite cellule de batterie (5) coupe une cellule de batterie (5) dans une section de batterie adjacente (6).

5. Batterie (2) selon l'une des revendications précédentes, **caractérisée en ce que** les cellules de batterie (5) de sections de batterie adjacentes (6) sont opposés les uns aux autres sur un élément de section de contact (7).

6. Batterie (2) selon l'une des revendications précédentes, **caractérisée en ce que** les cellules de batterie (5) de toutes les sections de batterie (6) de la batterie (2) ont des axes longitudinaux de cellules de batterie alignés parallèlement les uns aux autres.

7. Batterie (2) selon la revendication 6, **caractérisée en ce que** les sections de batterie (6) de la batterie (2) sont disposées les unes derrière les autres le long d'un axe de batterie parallèle aux axes longitudinaux des cellules de batterie.

8. Batterie (2) selon la revendication 7, **caractérisée en ce que** toutes les sections de batterie de la batterie sont situées dans un espace de batterie, où une section transversale de l'espace de batterie de l'espace de batterie perpendiculaire à l'axe de la batterie correspond à une section transversale maximale d'une enveloppe de section de batterie d'une section de batterie perpendiculaire à l'axe de batterie, où la section transversale maximale de la batterie est la section transversale d'une section de batterie d'une section de batterie comprenant toutes les sections de sections de batterie le long de l'axe de batterie.

9. Batterie (2) selon l'une des revendications précédentes, **caractérisée en ce que** les premières connexions d'extrémité des cellules de batterie (5) forment des pôles positifs de batterie et les deuxièmes connexions d'extrémité des cellules de batterie (5) forment des pôles négatifs de batterie, les cellules de batterie (5) d'une section de batterie (6) étant reliées à un élément de section de contact (7) chacun exclusivement via des pôles positifs de batterie ou exclusivement via les pôles négatifs de batterie.

10. Batterie (2) selon l'une des revendications précédentes, **caractérisée en ce que** l'élément de section de contact (7) est en forme de plaque.

11. Batterie (2) selon l'une des revendications précédentes, **caractérisée en ce que** l'élément de section de contact (7) présente sur l'élément de section de contact (7) des sections plates qui sont disposées pas à pas décalées les unes par rapport aux autres.

12. Batterie (2) selon l'une des revendications précédentes, **caractérisée en ce qu'**une plaque de pression (3) est disposée respectivement dans une zone de démarrage de batterie (8) et dans une zone d'extrémité de batterie (9) de l'arrangement de cellules (1), où les plaques de pression (3) sont reliées l'une à l'autre par l'intermédiaire d'éléments de tension (4) et les cellules de batterie (5) en contact avec au moins un élément de section de contact (7) appuient contre l'au moins un élément de section de contact (7), et où la région de démarrage de batterie (8) et la région d'extrémité de batterie (9) sont définies par des connexions terminales sur une première extrémité et sur une seconde extrémité du arrangement des cellules (1).

13. Batterie (2) selon l'une des revendications précédentes, **caractérisée en ce qu'**au moins une plaque de positionnement (10), à travers laquelle sont guidés les cellules de batterie (5) de la section de batterie (6), est disposée dans l'arrangement de cellules (1), la plaque de positionnement (10) présentant au moins un évidement pour le passage d'au moins une cellule de batterie (5), et **en ce que** l'évidement est défini par une courbe d'enveloppe autour des cellules de batterie (5) de la section de batterie (6), l'évidement entourant positivement les au moins une cellule de batterie (5) pour positionner et stabiliser l'au moins une cellule de batterie (5) dans la batterie (2).

14. Batterie (2) selon l'une des revendications précédentes, **caractérisée en ce qu'**au moins un élément de section de contact (7) est relié thermiquement conducteur par l'intermédiaire d'un élément de dissipation thermique (12) à un radiateur, et/ou **en ce que** l'arrangement de cellules (1) est entouré d'un boîtier (33) thermiquement conducteur, en particulier l'élément de dissipation thermique (12) étant relié au boîtier (33).

15. Batterie (2) selon l'une des revendications précédentes, **caractérisée en ce qu'**au moins deux sections de contact (21) et une section de connexion (23) conductrice de l'électricité et de la chaleur, qui relie les sections de contact (21) l'une à l'autre de manière conductrice de l'électricité et de la chaleur du premier côté (20), sont disposées sur le premier côté (20) de l'élément structurel conducteur, **en ce qu'**un fusible électrique (24) est affecté à chaque section de contact (21) du premier côté (20), et **en ce que** la section de connexion (23) est reliée à chaque section de contact (21) via un fusible électrique (24) affecté à cette section de contact (21), où la section de connexion (23) est connectée électriquement de manière conductrice à l'au moins une section de contact (21) sur le second côté (26) à travers le matériau non conducteur de l'élément structurel conducteur via un élément de traversée électriquement conducteur (29) de sorte que chaque section de contact (21) sur le premier côté (20) est protégée contre chaque autre section de contact (21) sur le premier côté (20) de l'élément conducteur et contre chaque section de contact (21) du second côté (26) de l'élément conducteur par au moins un fusible électrique.
